# EUROPEAN PATENT APPLICATION

(11) **EP 4 837 718 A1**
(43) Date of publication of application: **11.11.2026**
(21) Application number: 25773923.5
(22) Date of filing: 12.02.2025
(51) Int. Cl.: B29C 39/26, H01M 8/021, H01M 8/0286

(54) **MOLD AND COMPOSITE MEMBER FOR ELECTROCHEMICAL DEVICE**

(30) Priority: 22.03.2024 JP 2024047348
(71) Applicant: Sumitomo Riko Company Limited, Komaki-shi, Aichi 485-8550 (JP)
(72) Inventor: ONISHI, Masahiro, Komaki-shi, Aichi 485-8550 (JP); SAKAI, Shota, Komaki-shi, Aichi 485-8550 (JP); HAGA, Shinichi, Komaki-shi, Aichi 485-8550 (JP)
(74) Representative: Becker, Eberhard
(86) International application number: PCT/JP2025/004613
(87) International publication number: WO 2025/197368

(57) **Abstract**

The present invention addresses the problem of providing: a mold which has high durability and is capable of suppressing burrs from a gasket; and a composite member for an electrochemical device. This mold (5) is provided with a first mold (5D) and a second mold (5U). A base material (2) is disposed in the first mold (5D). The second mold (5U) is disposed so as to face the first mold (5D) in the Y direction, and has a cut-off part (50) and a cavity recess part (51) that is disposed on the inner side of the cut-off part (50) in the X-direction and that partitions a cavity (5M) for molding a gasket (4). The cut-off part (50) has: a planar top surface (500) that protrudes toward the base material (2) side with respect to a parting line (PL) and extends in the X direction; a protruding inner side surface (501) that is disposed on the inner side of the top surface (500) in the X-direction; and a protruding outer side surface (502) that is disposed on the outer side of the top surface (500) in the X-direction. The width (W2) in the X-direction between the protruding inner side surface (501) and the protruding outer side surface (502) narrows in the direction from the parting line (PL) toward the top surface (500).

## Description

### Technical Field

The present invention relates to a mold for insert molding used in forming a gasket on a base material, and a composite member for electrochemical device manufactured using the mold.

### Related Art

Patent Document 1 discloses a mold for gasket molding capable of suppressing the generation of burrs. The mold is used in forming a gasket on a component of a fuel cell (such as a separator). The mold includes an upper mold and a lower mold. A gasket forming portion and a seal groove are recessed in a lower surface (mold surface) of the upper mold. The seal groove is disposed around the gasket forming portion. A seal member made of an elastic body is disposed in the seal groove.

During molding, a component is first placed on an upper surface (mold surface) of the lower mold in a mold-open state. Next, the upper mold is brought into contact with the component. That is, mold clamping is performed. By the mold clamping, a cavity is defined between the component and the gasket forming portion of the upper mold. Further, by the mold clamping, the seal member in the seal groove of the upper mold comes into elastic contact with the upper surface of the component. The cavity is sealed by the elastic contact of the seal member. Subsequently, the raw material of the gasket is filled into the sealed cavity.

Here, the seal member is made of an elastic body. For this reason, even in the case where warping or deformation occurs in the component, the seal member is able to closely contact the upper surface of the component during mold clamping. Thus, leakage of the raw material from the cavity is suppressed during filling of the raw material of the gasket. Thus, generation of burrs is suppressed.

### Citation List

### Patent Documents

Patent Document 1: Japanese Patent Application Laid-Open (JP-A) No. 2010-040477.

### SUMMARY OF INVENTION

### Technical Problem

However, in the case of the mold of the same document, the seal groove and the seal member are indispensable. For this reason, the configuration of the lower surface (mold surface) of the upper mold becomes complicated. In this regard, by disposing a cut-off portion around the gasket forming portion, generation of burrs is suppressed without using the seal groove and the seal member. Specifically, instead of the seal groove and the seal member, a cut-off portion protruding downward is disposed on the mold surface of the upper mold of the mold of the same document. In this way, the cut-off portion comes into pressure contact with the upper surface of the component, so that the cavity is sealed. For this reason, leakage of the raw material from the cavity is suppressed during filling of the raw material of the gasket. Thus, generation of burrs is suppressed.

However, depending on the rigidity of the component, the durability of the cut-off portion of the mold may decrease. That is, in order to reliably seal the cavity, the cut-off portion is brought into pressure contact with the upper surface of the component. For this reason, in the case where the rigidity of the component is high, the cut-off portion tends to be damaged as the number of shots of the mold increases. That is, the durability of the cut-off portion decreases.

Accordingly, the disclosure aims to provide a mold in which the durability of the cut-off portion is high and generation of burrs from the gasket is suppressed. Further, the disclosure aims to provide a composite member for electrochemical device in which generation of burrs from the gasket is suppressed.

### Solution to Problem

(1) In order to solve the above problem, a mold of the disclosure is a mold for insert molding used for molding a gasket on a thin plate-shaped base material disposed in a mold and including a cut-off portion that suppresses burrs from the gasket, in which an extending direction of a parting line of the mold is defined as an X-direction, an opening and closing direction of the mold is defined as a Y-direction, a side close to a cavity for molding the gasket in the X-direction is defined as an X-direction inner side, and a side opposite to the X-direction inner side in the X-direction is defined as an X-direction outer side, the mold includes: a first mold on which the base material is disposed; and a second mold disposed facing the first mold in the Y-direction and having the cut-off portion and a cavity recess portion disposed on the X-direction inner side of the cut-off portion and defining the cavity. The cut-off portion has a planar top surface that protrudes toward the base material side with respect to the parting line and extends in the X-direction, a protruding inner side surface disposed on the X-direction inner side of the top surface, and a protruding outer side surface disposed on the X-direction outer side of the top surface, and the X-direction width between the protruding inner side surface and the protruding outer side surface narrows in a direction from the parting line toward the top surface.

Here, the aspect of "suppressing burrs" includes, for example, an aspect of suppressing the generation of burrs itself and an aspect of suppressing the extension of generated burrs. According to this configuration, the top surface of the cut-off portion is planar and extends in the X-direction. For this reason, compared to a case where the top surface is curved or a case where the top surface extends in a direction intersecting the X-direction, local pressure contact of the top surface with the base material during mold clamping (uneven contact of the top surface with the base material) may be suppressed. Thus, concentration of stress on a part of the top surface may be alleviated. Thus, damage to the cut-off portion is suppressed, and durability may be improved. Further, the improved durability of the cut-off portion allows for greater flexibility in selecting the material of the base material. For example, a base material made of a material with a high Young's modulus may be adopted.

Further, compared to a case where the top surface is not arranged on the cut-off portion (for example, a case where a pair of side surfaces (the protruding inner side surface and the protruding outer side surface) are directly connected without the top surface interposed therebetween), the shape accuracy of the cut-off portion (in particular, the height accuracy in the Y-direction) may be increased.

The X-direction width between the pair of side surfaces (the protruding inner side surface and the protruding outer side surface) narrows in a direction from the parting line PL toward the top surface. For this reason, compared to a case where the X-direction width between the pair of side surfaces is constant in a direction from the parting line toward the top surface, concentration of stress at the boundary between the top surface and the side surfaces during mold clamping may be alleviated.
(1-1) In the configuration of (1) above, in opening and closing the mold, it is preferable that the first mold is a fixed mold and the second mold is a movable mold. According to this configuration, in opening and closing the mold (in mold opening and mold clamping), the first mold is fixed. The base material is disposed on the first mold. For this reason, positional displacement of the base material during mold opening and closing is suppressed.
(1-2) In any of the configurations above, the cut-off portion is disposed on two sides of the cavity recess portion in the X-direction. According to this configuration, burrs may be suppressed on two sides of the cavity recess portion in the X-direction.
(1-3) In any of the configurations above, as viewed from the Y-direction, the cut-off portion extends in an endless annular shape around the cavity recess portion. According to this configuration, the cut-off portion surrounds the cavity recess portion. For this reason, leakage of the raw material of the gasket may be suppressed over the entire circumference of the cavity recess portion, that is, the cavity.
(1-4) In any of the configurations above, it is preferable that the ratio of the surface area to the plate thickness of the base material (= surface area / plate thickness) is 30000 or more and 3125000 or less. According to this configuration, the ratio of the surface area to the plate thickness is set to 30000 or more. For this reason, compared to a case where the ratio is less than 30000, the plate thickness becomes larger relative to the surface area, and an increase in size of a stack (laminate) of an electrochemical device such as a fuel cell may be suppressed. Further, according to this configuration, the ratio of the surface area to the plate thickness is set to 3125000 or less. For this reason, compared to a case where the ratio exceeds 3125000, the plate thickness becomes smaller relative to the surface area, and excessive deformation of the separator may be suppressed.

According to this configuration, the ratio of the surface area to the plate thickness of the base material is set to 30000 or more and 3125000 or less. That is, the base material of this configuration presents a thin plate shape. For this reason, the base material is moderately susceptible to deformation. Thus, during mold clamping, the shape accuracy of the mold is readily reflected (transferred) onto the base material. For example, in order to improve the durability of the cut-off portion, quenching may be applied to the mold to increase the hardness. However, applying quenching tends to generate deformation such as "warping" in the mold. That is, the shape accuracy of the mold tends to decrease. Thus, in the case of forming a gasket on a thin plate-shaped base material (a base material susceptible to deformation) using the mold, there is a possibility that the shape accuracy of the base material decreases.

In this regard, according to this configuration, the durability of the cut-off portion is improved without applying processing to the mold that increases hardness (processing that may decrease shape accuracy). For this reason, even though the base material presents a thin plate shape, that is, even though the base material is susceptible to deformation, a decrease in the shape accuracy of the base material is suppressed.

(1-5) In any of the configurations above, it is preferable that the ratio of the surface area of the base material to the Y-direction thickness of the gasket (= surface area / Y-direction thickness) is 5000 or more and 500000 or less. According to this configuration, the ratio of the surface area to the Y-direction thickness of the gasket is set to 5000 or more. For this reason, compared to a case where the ratio is less than 5000, the Y-direction thickness of the gasket becomes larger relative to the surface area, and an increase in size of a stack (laminate) of an electrochemical device such as a fuel cell may be suppressed. Further, according to this configuration, the ratio of the surface area to the Y-direction thickness of the gasket is set to 500000 or less. For this reason, compared to a case where the ratio exceeds 500000, the Y-direction thickness of the gasket becomes smaller relative to the surface area, and a decrease in the amount of elastic deformation of the gasket may be suppressed, that is, a decrease in sealing performance may be suppressed.

(1-6) In any of the configurations above, it is preferable that, with the Young's modulus of the material of the second mold taken as 100%, the Young's modulus of the material of the base material is 80% or more and 150% or less. According to this configuration, the Young's modulus is set to 80% or more. For this reason, compared to a case where the Young's modulus is less than 80%, a decrease in the rigidity of the base material may be suppressed. Further, even though the rigidity of the base material is high, the durability of the cut-off portion may be secured. Further, according to this configuration, the Young's modulus is set to 150% or less. For this reason, compared to a case where the Young's modulus exceeds 150%, an excessive increase in the rigidity of the base material may be suppressed.

(1-7) In the configuration of (1-6) above, it is preferable that the material of the base material is stainless steel. According to this configuration, corrosion of the base material may be suppressed by an oxide film of the stainless steel. Further, compared to a case where a base material made of a material with a low Young's modulus (for example, titanium, etc.) is used, the rigidity of the base material may be increased. Further, even though the rigidity of the base material is high, the durability of the cut-off portion is improved.

(1-8) In any of the configurations above, it is preferable that corner portions are interposed at the boundary between the top surface and the protruding inner side surface and at the boundary between the top surface and the protruding outer side surface, respectively. According to this configuration, compared to a case where rounded chamfered portions (curved chamfered portions) are interposed at the boundary between the top surface and the protruding inner side surface and at the boundary between the top surface and the protruding outer side surface, respectively, the shape accuracy of the cut-off portion may be increased.

(2) In any of the configurations above, it is preferable that the protruding inner side surface and the protruding outer side surface each present a planar shape. According to this configuration, the pair of side surfaces (the protruding inner side surface and the protruding outer side surface) both present a planar shape. For this reason, the X-direction width between the pair of side surfaces gradually narrows in a direction from the parting line toward the top surface. Thus, concentration of stress on a part of the side surfaces during mold clamping may be alleviated.

(3) In any of the configurations above, it is preferable that an intersection angle between the protruding inner side surface and the protruding outer side surface is an obtuse angle. According to this configuration, the intersection angle of the pair of side surfaces (the protruding inner side surface and the protruding outer side surface) is set to an obtuse angle (an angle exceeding 90°). For this reason, compared to a case where the intersection angle is 90° or less, concentration of stress at the boundary between the top surface and the side surfaces during mold clamping may be alleviated.

(4) In any of the configurations above, it is preferable that the intersection angle is 120° or more and 150° or less. According to this configuration, the intersection angle is set to 120° or more. For this reason, compared to a case where the intersection angle is less than 120°, concentration of stress at the boundary between the top surface and the side surfaces (the protruding inner side surface and the protruding outer side surface) during mold clamping may be alleviated. Further, according to this configuration, the intersection angle is set to 150° or less. For this reason, compared to a case where the intersection angle exceeds 150°, an increase in the X-direction width of the cut-off portion may be suppressed. That is, the cut-off portion may be reduced in size.

(4-1) In any of the configurations above, it is preferable that the inclination angle of the protruding inner side surface or the protruding outer side surface with respect to the Y-direction is 60° or more. According to this configuration, compared to a case where the inclination angle is less than 60°, concentration of stress at the boundary between the top surface and the protruding inner side surface, or at the boundary between the top surface and the protruding outer side surface during mold clamping may be alleviated.

(5) In any of the configurations above, it is preferable that an inclination angle of the protruding inner side surface with respect to the Y-direction and an inclination angle of the protruding outer side surface with respect to the Y-direction are identical. According to this configuration, the stress distribution on two sides in the X-direction with respect to the central axis in the X-direction of the cut-off portion is equalized.

(6) In any of the configurations above, it is preferable that the protruding inner side surface straddles the parting line and extends from the top surface to an interior of the cavity recess portion. According to this configuration, compared to a case where the protruding inner side surface of the cut-off portion does not straddle the parting line (a case where the protruding inner side surface does not extend to the interior of the cavity recess portion), concentration of stress at the opening edge of the cavity recess portion during mold clamping may be alleviated.

(7) In any of the configurations above, it is preferable that the second mold has a deformation absorption recess disposed on the X-direction outer side of the cut-off portion and configured to absorb deformation of the base material when the top surface is in pressure contact with the base material.

During mold clamping, the base material may elastically deform in the case where the top surface of the cut-off portion is in pressure contact with the base material. Specifically, the base material may rise from the first mold. In this regard, according to this configuration, the deformed portion of the base material may be accommodated in the deformation absorption recess. For this reason, the apparent cut-off depth (apparent cut-in amount) of the cut-off portion with respect to the base material may be increased.

(8) In any of the configurations above, it is preferable that the deformation absorption recess has a planar bottom surface that is recessed into an interior of the second mold with respect to the parting line and extends in the X-direction, a recessed inner side surface disposed on the X-direction inner side of the bottom surface, and a recessed outer side surface disposed on the X-direction outer side of the bottom surface, and the X-direction width between the recessed inner side surface and the recessed outer side surface narrows in a direction from the parting line toward the bottom surface.

According to this configuration, in the case where the deformed part of the base material presents a curved plate shape that bulges in a direction from the parting line toward the bottom surface, the deformed portion may be accommodated in the deformation absorption recess easily.

(9) In any of the configurations above, it is preferable that the cut-off portion and the deformation absorption recess are disposed adjacent to each other, and the protruding outer side surface and the recessed inner side surface connect smoothly from the X-direction inner side toward the X-direction outer side.

Here, examples of aspects in which the protruding outer side surface and the recessed inner side surface "connect smoothly" include an aspect in which they connect in a planar manner and an aspect in which they connect in a curved manner. According to this configuration, compared to a case where the boundary between the protruding outer side surface of the cut-off portion and the recessed inner side surface of the deformation absorption recess is angular, concentration of stress at the boundary may be alleviated.

(10) In any of the configurations above, it is preferable that the top surface has a protrusion amount in the Y-direction with respect to the parting line of 10 µm or more and 100 µm or less.

According to this configuration, the protrusion amount in the Y-direction of the top surface is set to 10 µm or more. For this reason, compared to a case where the protrusion amount in the Y-direction of the top surface is less than 10 µm, leakage of the raw material of the gasket from the cavity may be suppressed. That is, sealing performance may be improved. Further, compared to a case where the protrusion amount in the Y-direction of the top surface is less than 10 µm, the processing accuracy of the mold may be improved.

Further, according to this configuration, the protrusion amount in the Y-direction of the top surface is set to 100 µm or less. For this reason, compared to a case where the protrusion amount in the Y-direction of the top surface exceeds 100 µm, excessive cut-in of the top surface into the base material may be suppressed. Accordingly, damage to the cut-off portion and the base material may be suppressed.

(11) In any of the configurations above, it is preferable that the X-direction width of the top surface is 10 µm or more and 500 µm or less. According to this configuration, the X-direction width of the top surface is set to 10 µm or more. For this reason, compared to a case where the X-direction width of the top surface is less than 10 µm, leakage of the raw material of the gasket from the cavity may be suppressed. That is, sealing performance may be improved.

Further, according to this configuration, the X-direction width of the top surface is set to 500 µm or less. For this reason, compared to a case where the X-direction width of the top surface exceeds 500 µm, the pressure contact area of the top surface with respect to the base material may be reduced. Accordingly, damage to the cut-off portion and the base material may be suppressed.

(12) In any of the configurations above, it is preferable that the cut-off portion is disposed at a predetermined interval away from the cavity recess portion toward the X-direction outer side. According to this configuration, the cut-off portion is arranged offset toward the X-direction outer side from the cavity recess portion. For this reason, compared to a case where the cut-off portion is arranged adjacent to the cavity recess portion, concentration of stress at the boundary between the cut-off portion and the cavity recess portion during mold clamping may be alleviated.

(13) In order to solve the above problems, a composite member for an electrochemical device of the disclosure includes a base material and a gasket disposed on a surface of the base material, in which an extending direction of the surface is defined as an X-direction, a laminating direction of the base material and the gasket is defined as a Y-direction, a side close to the gasket in the X-direction is defined as an X-direction inner side, and a side opposite to the X-direction inner side in the X-direction is defined as an X-direction outer side. The base material has, on the surface, a recessed trace portion and a gasket placement portion disposed on the X-direction inner side of the trace portion and on which the gasket is disposed. The trace portion has a planar bottom surface, a trace portion recessed inner side surface disposed on the X-direction inner side of the bottom surface, and a trace portion recessed outer side surface disposed on the X-direction outer side of the bottom surface. The X-direction width between the trace portion recessed inner side surface and the trace portion recessed outer side surface narrows in a direction from the surface toward the bottom surface. Here, examples of the "electrochemical device" include fuel cells and water electrolysis devices.

According to this configuration, the X-direction width between a pair of side surfaces (the trace portion recessed inner side surface and the trace portion recessed outer side surface) narrows in a direction from the surface toward the bottom surface. For this reason, compared to a case where the X-direction width between the pair of side surfaces is constant in a direction from the surface toward the bottom surface, concentration of residual stress at the boundary between the bottom surface and the side surfaces may be alleviated.

Further, according to this configuration, in manufacturing a composite member for electrochemical device using the mold of any of the configurations above, burrs from the gasket may be suppressed. For this reason, the shape accuracy of the gasket may be improved. It is noted that the aspect of "suppressing burrs" includes, for example, an aspect of suppressing the occurrence of burrs itself and an aspect of suppressing the extension of burrs that have occurred.

In manufacturing a composite member for electrochemical device using the mold of any of the configurations above, the bottom surface of the trace portion is formed by the top surface of the cut-off portion, the trace portion recessed inner side surface of the trace portion is formed by the protruding inner side surface of the cut-off portion, and the trace portion recessed outer side surface of the trace portion is formed by the protruding outer side surface of the cut-off portion, respectively.

The top surface of the cut-off portion is planar and extends in the X-direction. For this reason, compared to a case where the top surface is curved or a case where the top surface extends in a direction intersecting the X-direction, local pressure contact of the top surface with the base material during mold clamping (uneven contact of the top surface with the base material) may be suppressed. Accordingly, concentration of stress at a portion of the top surface, that is, concentration of residual stress at a portion of the bottom surface of the trace portion, may be alleviated. Further, compared to a case where the top surface is not arranged on the cut-off portion, the shape accuracy of the cut-off portion, that is, the trace portion, may be improved.

The X-direction width between a pair of side surfaces (the protruding inner side surface and the protruding outer side surface) of the cut-off portion narrows in a direction from the parting line toward the top surface. For this reason, compared to a case where the X-direction width between the pair of side surfaces is constant in a direction from the parting line toward the top surface, concentration of stress at the boundary between the top surface and the side surfaces during mold clamping may be alleviated. Accordingly, concentration of residual stress at the boundary between the bottom surface of the trace portion and the side surfaces (the trace portion recessed inner side surface and the trace portion recessed outer side surface) is suppressed.

### Effects of Invention

According to the mold of the disclosure, the durability of the cut-off portion is improved. Further, burrs from the gasket are suppressed. According to the composite member for electrochemical device of the disclosure, burrs from the gasket are suppressed.

### BRIEF DESCRIPTION OF DRAWINGS

[FIG. 1] FIG. 1 is a top view of a composite member for fuel cell of a first embodiment.
[FIG. 2] FIG. 2 is an enlarged view of a frame II in FIG. 1.
[FIG. 3] FIG. 3 is a cross-sectional view taken along the III-III direction in FIG. 2.
[FIG. 4] FIG. 4 is an enlarged view of a frame IV in FIG. 3.
[FIG. 5] FIG. 5 is a cross-sectional view of a mold used in manufacturing the composite member for fuel cell.
[FIG. 6] FIG. 6 is a partial cross-sectional view of the mold in an injection process (shaping process (mold open state)) of a manufacturing method of the composite member for fuel cell.
[FIG. 7] FIG. 7 is a partial cross-sectional view of the mold in the injection process (shaping process (mold clamping state)) of the manufacturing method.
[FIG. 8] FIG. 8 is an enlarged view of a frame VIII in FIG. 7.
[FIG. 9] FIG. 9 is a partial cross-sectional view of the mold in the injection process (injection filling process) of the manufacturing method.
[FIG. 10] FIG. 10 is an enlarged view of a frame X in FIG. 9.
[FIG. 11] FIG. 11 is a partial cross-sectional view of the mold in the vulcanization process of the manufacturing method.
[FIG. 12] FIG. 12 is an enlarged view of the frame XII in FIG. 11.
[FIG. 13] FIG. 13 is a partial cross-sectional view of a mold of a second embodiment.
[FIG. 14] FIG. 14 is a partial cross-sectional view of a mold of a third embodiment.
[FIG. 15] FIG. 15 is a partial cross-sectional view of a mold of a fourth embodiment.
[FIG. 16] FIG. 16 is a partial top view of a composite member for fuel cell of another embodiment.

### DESCRIPTION OF EMBODIMENTS

Hereinafter, embodiments of the mold and the composite member for fuel cell of the disclosure will be described. The composite member for fuel cell is included in the concept of the "composite member for electrochemical device" of the disclosure.

### <First Embodiment>

### [Configuration of Composite Member for Fuel Cell]

First, the configuration of the composite member for fuel cell of the present embodiment will be described. In the following figures, at least one of the front-rear and left-right directions (horizontal directions) corresponds to the "X-direction" of the disclosure. The up-down direction (vertical direction) corresponds to the "Y-direction" of the disclosure.

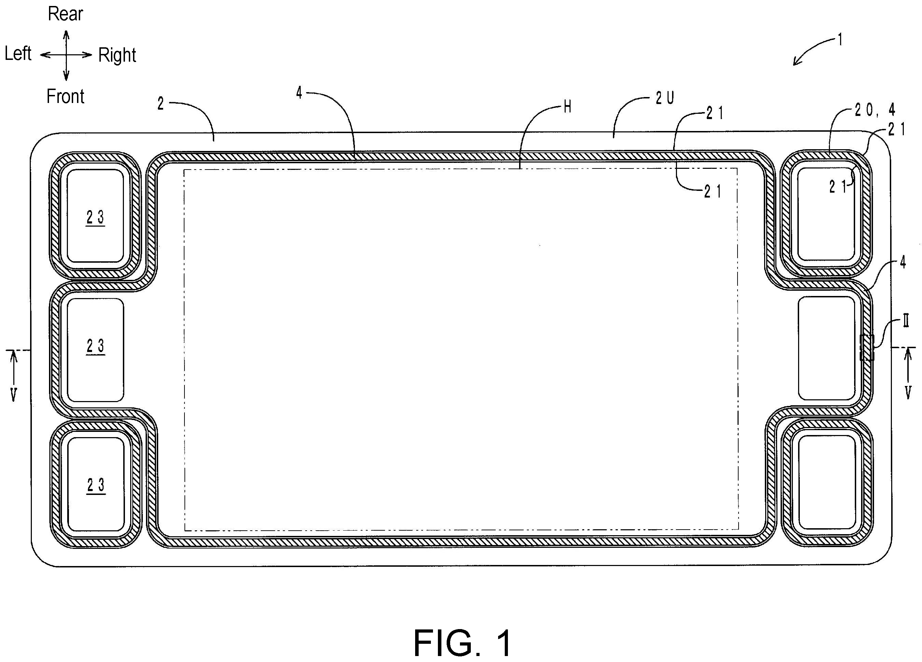

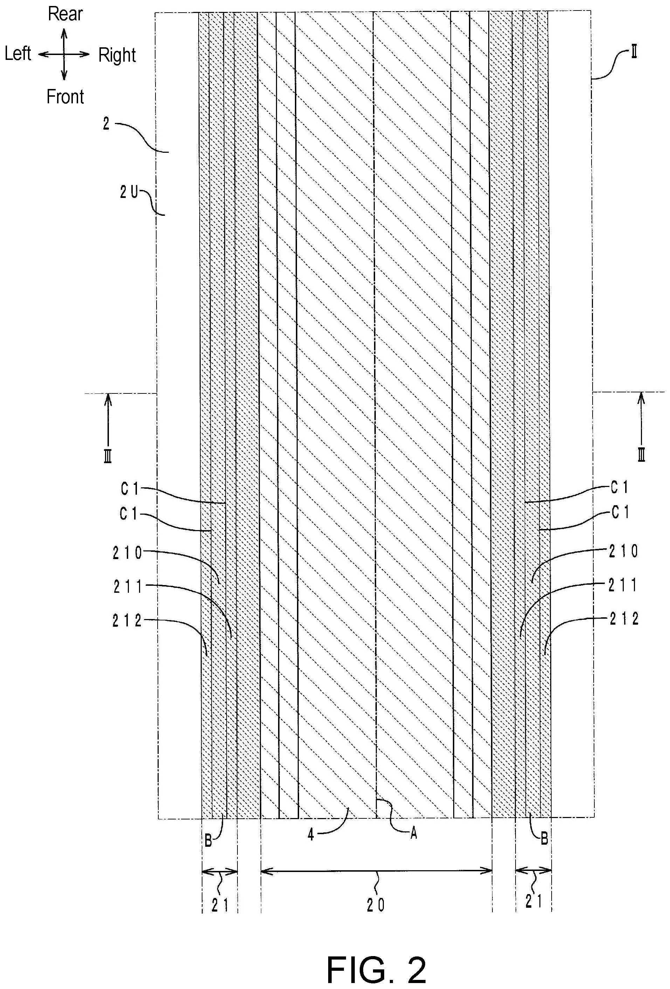

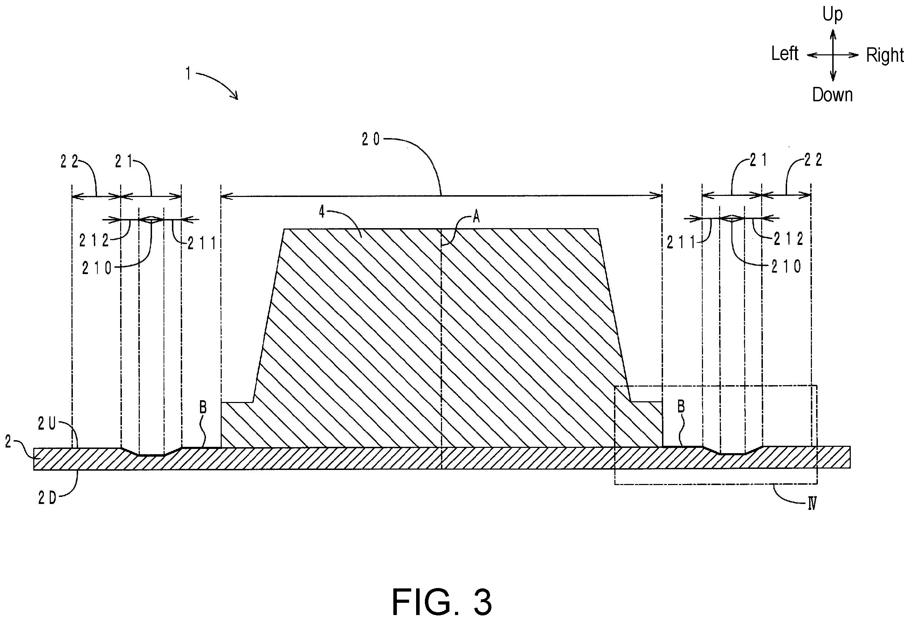

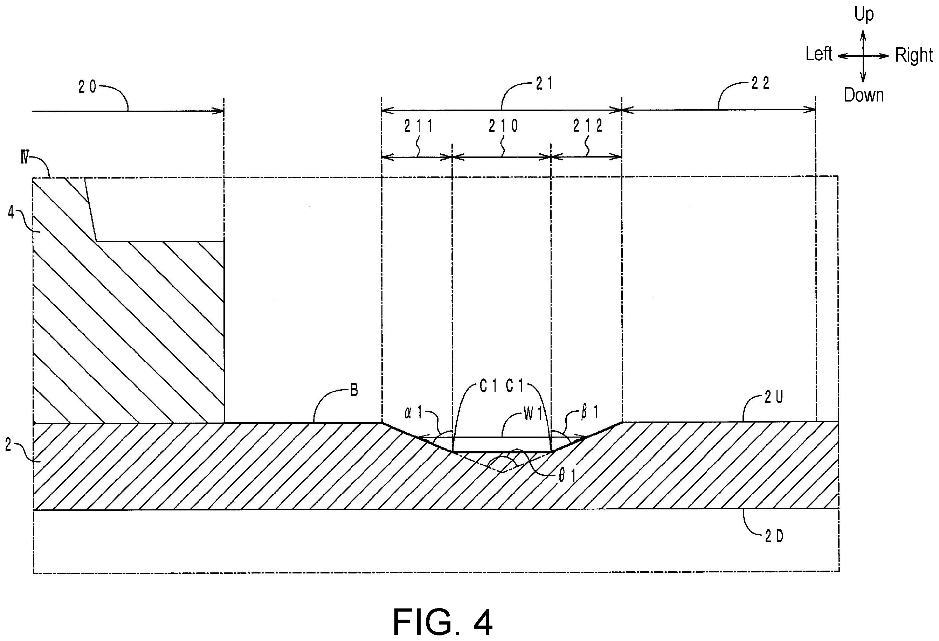

FIG. 1 shows a top view (surface view) of the composite member for fuel cell of the present embodiment. FIG. 2 shows an enlarged view of a frame II in FIG. 1. FIG. 3 shows a cross-sectional view taken along the III-III direction in FIG. 2. FIG. 4 shows an enlarged view of a frame IV in FIG. 3.

For convenience of description, in FIG. 1, hatching is applied to the gasket 4. The burr B is omitted. The trace portion 21 is schematically shown as a straight line. In FIG. 2, sparse hatching is applied to the gasket 4 and dense hatching is applied to the burr B, respectively. In FIG. 3 and FIG. 4, the burr B is shown as a bold line.

As shown in FIG. 1, the composite member for fuel cell 1 is a gasket-integrated separator. Within frame H of the upper surface (front surface) 2U, a "membrane electrode assembly (MEA) on which a gas diffusion layer (GDL: Gas Diffusion Layer) is laminated" (hereinafter referred to as "power generation unit"), which is not shown, is laminated. A stack of the fuel cell is configured by alternately laminating a plurality of composite members for fuel cell 1 and a plurality of power generation units in the up-down direction (front-back direction, laminating direction). The composite member for fuel cell 1 includes a separator 2 and a plurality of gaskets 4. The separator 2 is included in the concept of the "base material" of the disclosure.

As shown in FIG. 2 and FIG. 3, with respect to the central axis in the inner-outer frame direction (the direction orthogonal to the extending direction of the gasket placement portion 20) of the gasket placement portion 20 (gasket 4), that is, the X-direction central axis A, the configuration of the left portion (frame inner side portion) and the configuration of the right portion (frame outer side portion) are identical. With respect to the X-direction central axis A, the arrangement of the left portion and the arrangement of the right portion are symmetrical in the left-right direction (inner-outer frame direction). Hereinafter, the configuration and arrangement of the right portion will be described as a representative of the configurations and arrangements on two sides in the left-right direction.

### (Separator 2)

As shown in FIG. 1 to FIG. 3, the separator 2 is made of stainless steel (corrosion-resistant steel) and presents a rectangular thin plate shape. A plurality of manifolds (openings) 23 for gas and air are formed in the separator 2. A plurality of gasket placement portions 20 and a plurality of trace portions 21 are arranged on the upper surface 2U of the separator 2. The upper surface 2U of the separator 2 is included in the concept of the "surface of the base material" of the disclosure.

As shown in FIG. 1, the gasket placement portion 20 presents a frame shape. As shown in FIG. 3, the gasket placement portion 20 presents a planar shape. The gasket 4 is arranged in the gasket placement portion 20.

As shown in FIG. 1, a pair of trace portions 21 are arranged on the frame inner side and the frame outer side (that is, two sides in the X-direction) of an arbitrary gasket placement portion 20. The trace portion 21 presents a frame shape. As shown in FIG. 2, the trace portion 21 extends along the gasket placement portion 20. The trace portion 21 and the gasket placement portion 20 are arranged at a predetermined interval apart in the inner-outer frame direction (X-direction). As shown in FIG. 3 and FIG. 4, the trace portion 21 is recessed in the upper surface 2U of the separator 2.

As shown in FIG. 2 to FIG. 4, among the left and right pair of trace portions 21, the right trace portion 21 includes a bottom surface 210, a trace portion recessed inner side surface 211, and a trace portion recessed outer side surface 212. The bottom surface 210 is arranged at a position protruding downward (toward the interior of the separator 2) with respect to the upper surface 2U. The bottom surface 210 presents a planar shape extending in the front-rear and left-right directions (X-direction). The trace portion recessed inner side surface 211 is arranged on the left side (X-direction inner side, gasket placement portion 20 side) of the bottom surface 210. The trace portion recessed inner side surface 211 presents a planar shape. The trace portion recessed inner side surface 211 connects the upper surface 2U and the bottom surface 210. The trace portion recessed outer side surface 212 is arranged on the right side (X-direction outer side, opposite side of the gasket placement portion 20) of the bottom surface 210. The trace portion recessed outer side surface 212 presents a planar shape. The trace portion recessed outer side surface 212 connects the upper surface 2U and the bottom surface 210.

As shown in FIG. 4, the X-direction width (width in the left-right direction) W1 between the trace portion recessed inner side surface 211 and the trace portion recessed outer side surface 212 gradually decreases from the upper side toward the lower side (from the upper surface 2U toward the bottom surface 210). That is, the trace portion recessed inner side surface 211 and the trace portion recessed outer side surface 212 are arranged in a tapered shape that tapers from the upper side toward the lower side. The intersection angle θ1 between the trace portion recessed inner side surface 211 and the trace portion recessed outer side surface 212 is an obtuse angle. The intersection angle θ1 is included in a range of 120° or more and 150° or less. The inclination angle α1 of the trace portion recessed inner side surface 211 with respect to the up-down direction (Y-direction) and the inclination angle β1 of the trace portion recessed outer side surface 212 with respect to the up-down direction (Y-direction) are identical.

### (Gasket 4)

As shown in FIG. 3, the gasket 4 is fixed and laminated on the upper surface 2U of the separator 2. As shown in FIG. 1, the gasket 4 is made of rubber (thermosetting elastomer) and presents a frame shape. A large central gasket 4 surrounds the two left and right manifolds 23 and a frame H (power generation part) in an endless annular shape from the outer side in the surface direction. Each of the remaining plurality of gaskets 4 surrounds the manifold 23 in an endless annular shape from the outer side in the surface direction.

As shown in FIG. 1 to FIG. 4, the gasket 4 is arranged in the gasket placement portion 20. As shown in FIG. 2, a pair of burrs B are formed on the frame inner side and the frame outer side of an arbitrary gasket 4 shown in FIG. 1. As shown in FIG. 2, the burr B extends along the gasket 4. As shown in FIG. 2 to FIG. 4, among the left and right pair of burrs B, the right burr B extends to the right side of the gasket 4 (in a direction away from the gasket 4). However, as described later, the presence or absence, shape, size, number, and the like of the burr B are not particularly limited.

### [Configuration of Mold]

Next, a configuration of a mold used in manufacturing a composite member for fuel cell of the present embodiment will be described. As described later, a manufacturing method of the composite member for fuel cell of the present embodiment includes an injection process and a vulcanization process (crosslinking process).

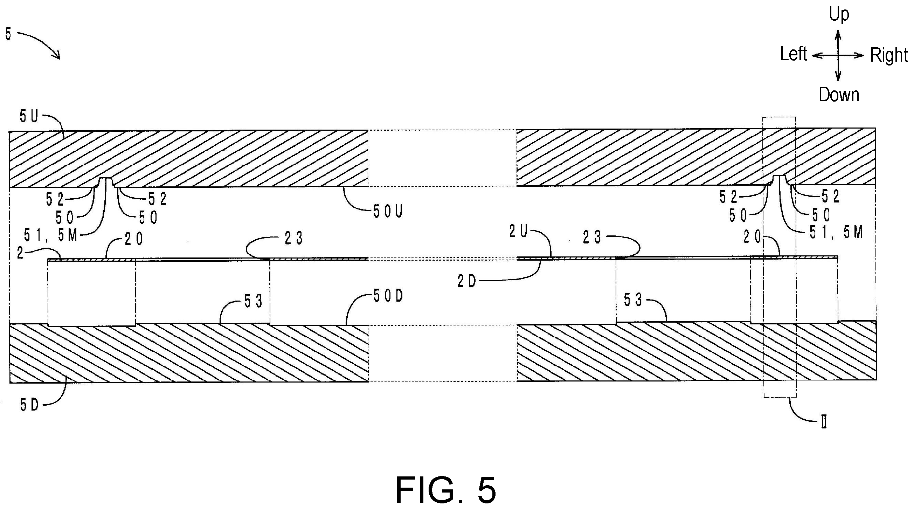

FIG. 5 shows a cross-sectional view of a mold used in manufacturing the composite member for fuel cell of the present embodiment. It is noted that an intermediate portion in the left-right direction is omitted. A cross-section of the separator 2 shown in FIG. 5 corresponds to a V-V cross-section of FIG. 1. A frame II of FIG. 5 and a frame II of FIG. 1 correspond to each other.

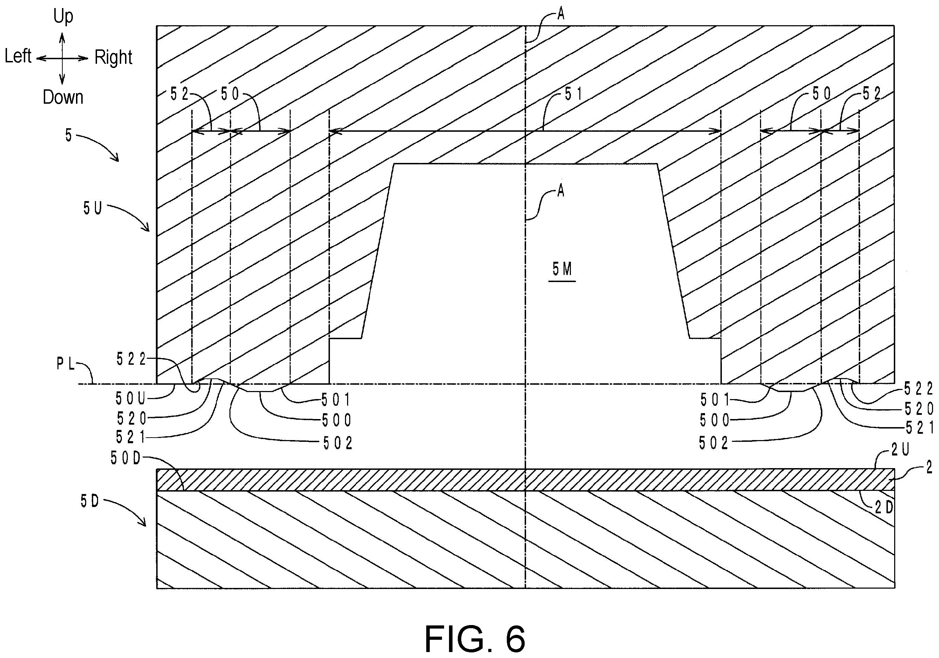

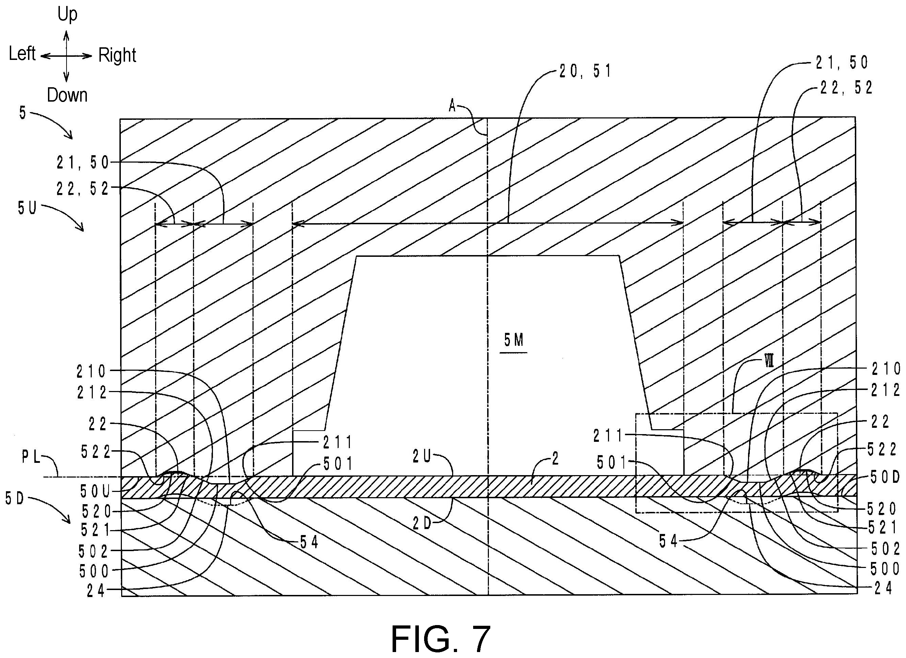

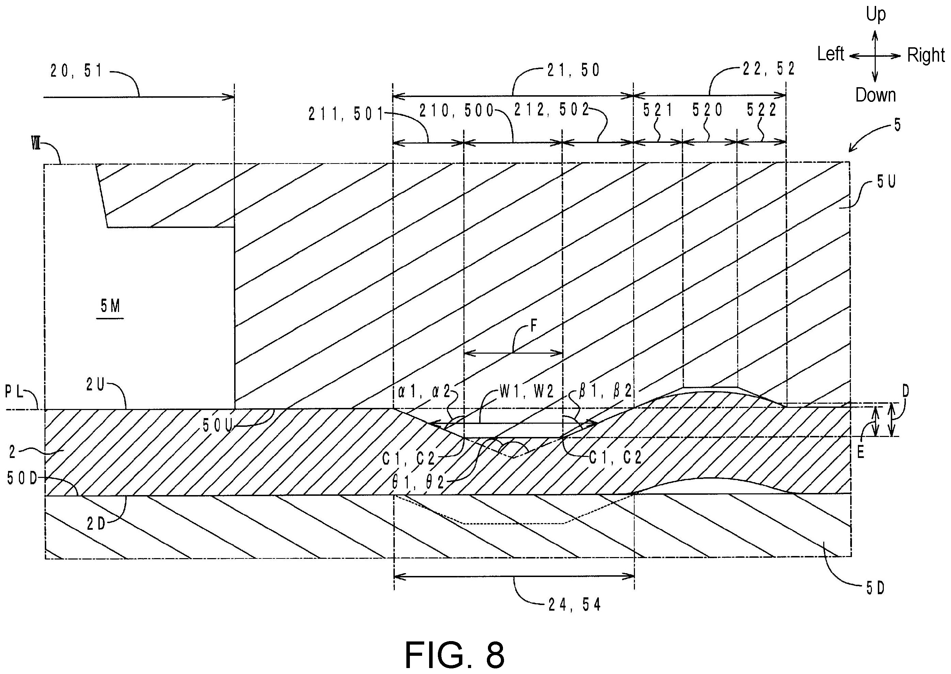

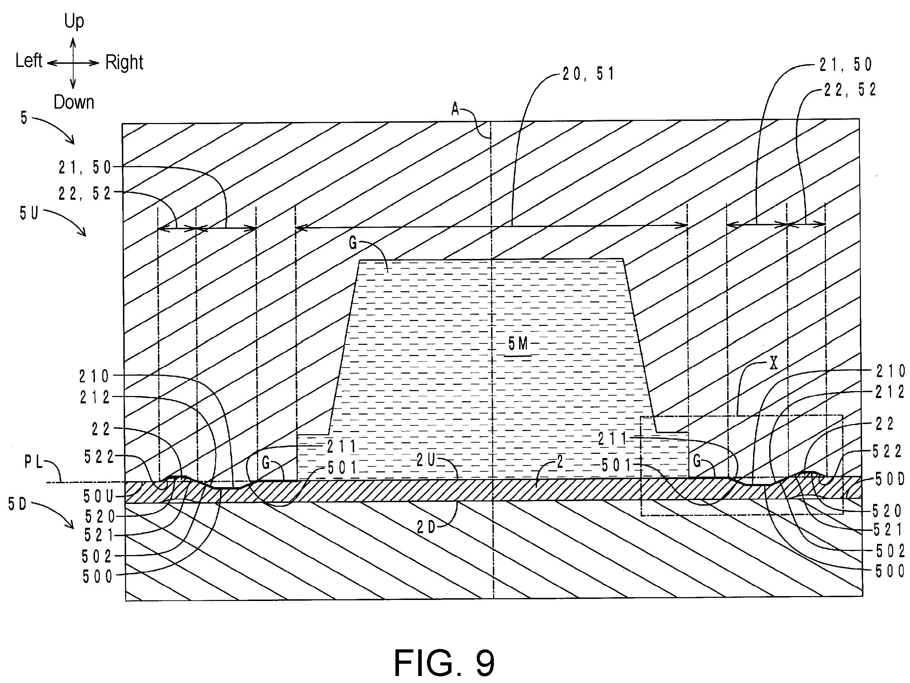

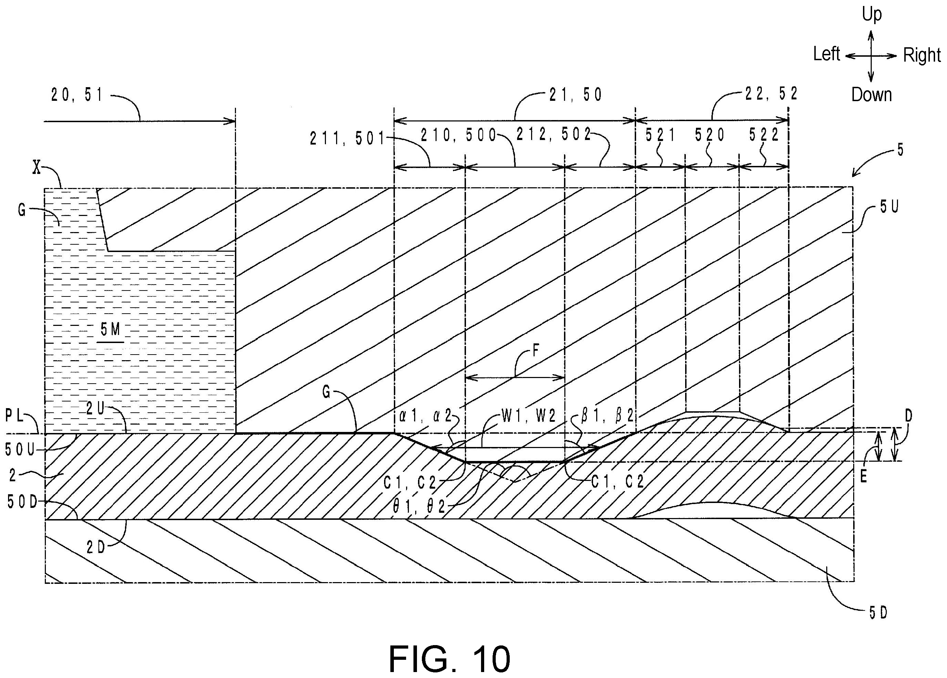

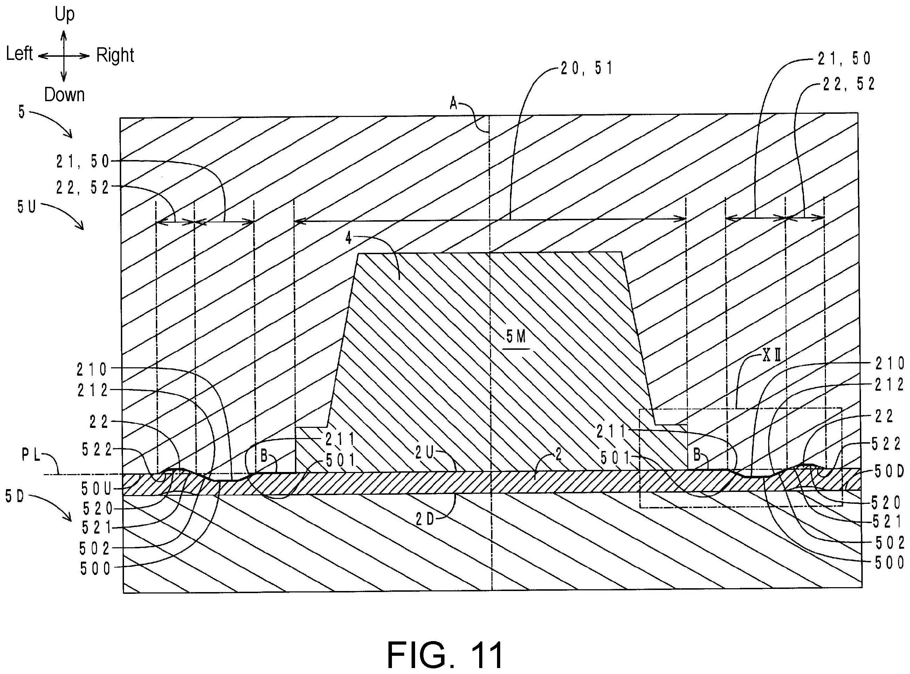

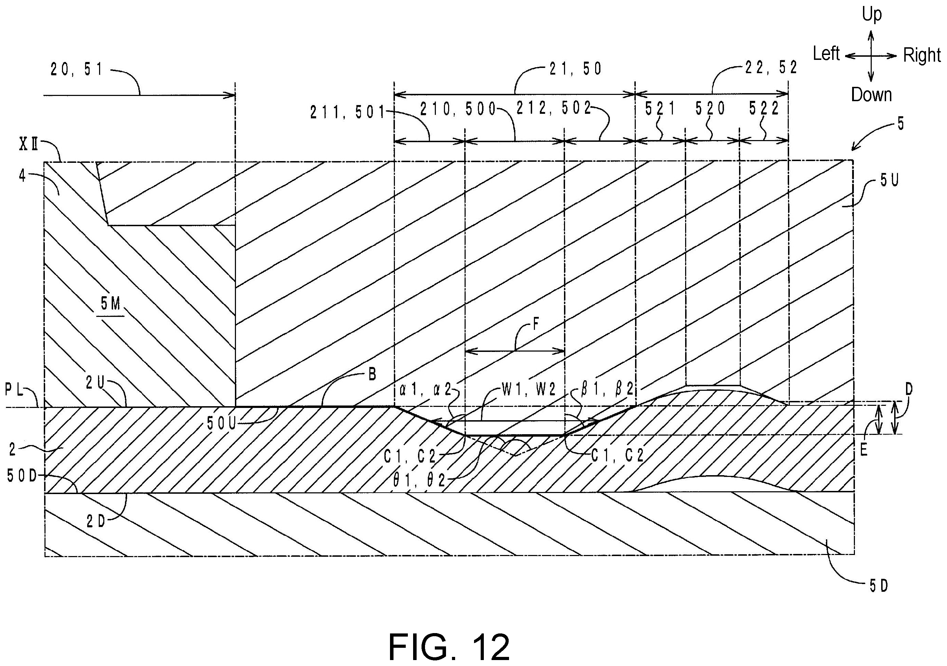

FIG. 6 shows a partial cross-sectional view of a mold in an injection process (shaping process (mold open state)) of a manufacturing method of the composite member for fuel cell of the present embodiment. FIG. 7 shows a partial cross-sectional view of the mold in the injection process (shaping process (mold clamping state)) of the manufacturing method. FIG. 8 shows an enlarged view within a frame VIII of FIG. 7. FIG. 9 shows a partial cross-sectional view of the mold in the injection process (injection filling process) of the manufacturing method. FIG. 10 shows an enlarged view within a frame X of FIG. 9. FIG. 11 shows a partial cross-sectional view of the mold in the vulcanization process of the manufacturing method. FIG. 12 shows an enlarged view within a frame XII of FIG. 11. It is noted that FIG. 6, FIG. 7, FIG. 9, and FIG. 11 correspond to FIG. 3 (a cross-sectional view in the III-III direction of FIG. 2). FIG. 8, FIG. 10, and FIG. 12 correspond to a frame IV of FIG. 4.

As shown in FIG. 6, FIG. 7, FIG. 9, and FIG. 11, with respect to an X-direction central axis A in the inner-outer frame direction (refer to FIG. 1) of the gasket placement portion 20 (gasket 4), a configuration of a left portion (frame inner side portion) and a configuration of a right portion (frame outer side portion) are identical. With respect to the X-direction central axis A, the arrangement of the left portion and the arrangement of the right portion are symmetrical in the left-right direction (inner-outer frame direction). Hereinafter, the configuration and arrangement of the right portion will be described as a representative of the configurations and arrangements on two sides in the left-right direction.

As shown in FIG. 5, a mold (forming mold) 5 includes a first mold 5D and a second mold 5U. The first mold 5D and the second mold 5U are made of iron. The mold 5 is used for forming the gasket 4 on a thin plate-shaped separator 2 arranged inside the mold. The mold 5 includes a cut-off portion 50 that suppresses a burr B from the gasket 4. A parting line PL of the mold 5 extends in a horizontal direction (X-direction). An opening and closing direction (mold opening-mold clamping direction) of the mold 5 corresponds to an up-down direction (Y-direction). A guide member (not shown) is arranged on an outer side in the left-right direction (outer side in the horizontal direction) of the mold 5. The mold 5 is positioned in the horizontal direction by the guide member.

### (First Mold 5D)

As shown in FIG. 5, a plurality of manifold protrusions 53 protrude from a mold surface 50D of the first mold 5D toward an upper side (second mold 5U side). In an injection process described later, the separator 2 is arranged on the mold surface 50D. A manifold 23 of the separator 2 is inserted into the manifold protrusion 53.

### (Second Mold 5U)

As shown in FIG. 5, the second mold 5U is arranged above the first mold 5D, facing the first mold 5D in the up-down direction. The second mold 5U is capable of approaching and separating from the first mold 5D from above. In the injection process described later, the first mold 5D is a fixed mold and the second mold 5U is a movable mold.

As shown in FIG. 7 and FIG. 8, an up-down direction position of a mold surface (forming surface) 50U of the second mold 5U corresponds to the parting line PL. On the mold surface 50U, a cavity recess portion 51, a left and right pair of cut-off portions 50, and a left and right pair of deformation absorption recesses 52 are arranged.

As shown in FIG. 8, the cavity recess portion 51 is recessed from the mold surface 50U toward an upper side (inner side of the second mold 5U). In the injection process described later, the cavity recess portion 51, together with a gasket placement portion 20 of the separator 2, partitions a cavity 5M for forming the gasket 4.

As shown in FIG. 7, among the left and right pair of cut-off portions 50, a right cut-off portion 50 is arranged at a predetermined interval from the cavity recess portion 51 toward a right side (deformation absorption recess 52 side, X-direction outer side). As shown in FIG. 8, the cut-off portion 50 protrudes from the mold surface 50U toward a lower side (separator 2 side). An up-down direction cross-sectional shape of the cut-off portion 50 presents a trapezoidal shape that tapers from an upper side toward a lower side. In the injection process described later, the cut-off portion 50 suppresses leakage of a raw material G (refer to FIG. 10) from the cavity 5M. That is, a burr B (refer to FIG. 12) is suppressed.

As shown in FIG. 8, the cut-off portion 50 includes a top surface 500, a protruding inner side surface 501, and a protruding outer side surface 502. The top surface 500 is arranged at a position protruding downward relative to the parting line PL (mold surface 50U). The top surface 500 presents a planar shape extending in a horizontal direction (X-direction). The protruding inner side surface 501 is arranged on a left side of the top surface 500 (cavity recess portion 51 side, X-direction inner side). The protruding inner side surface 501 presents a planar shape. The protruding inner side surface 501 connects the parting line PL (mold surface 50U) and the top surface 500. The protruding outer side surface 502 is arranged on a right side of the top surface 500 (opposite side of the cavity recess portion 51 side, deformation absorption recess 52 side, X-direction outer side). The protruding outer side surface 502 presents a planar shape. The protruding outer side surface 502 connects the parting line PL (mold surface 50U) and the top surface 500.

As shown in FIG. 8, an X-direction width (width in the left-right direction) W2 between the protruding inner side surface 501 and the protruding outer side surface 502 gradually decreases from an upper side toward a lower side (from the parting line PL toward the top surface 500). That is, the protruding inner side surface 501 and the protruding outer side surface 502 are arranged in a tapered shape that tapers from the upper side toward the lower side. An intersection angle θ2 between the protruding inner side surface 501 and the protruding outer side surface 502 is an obtuse angle. The intersection angle θ2 is included in a range of 120° or more and 150° or less. An inclination angle α2 of the protruding inner side surface 501 with respect to the up-down direction and an inclination angle β2 of the protruding outer side surface 502 with respect to the up-down direction coincide with each other.

The trace portion 21 of the separator 2 described above is formed by the cut-off portion 50 being in pressure contact with an upper surface 2U of the separator 2. For this reason, the cut-off portion 50 and the trace portion 21 present shapes that are mold-symmetric with each other. Thus, as shown in FIG. 8, the intersection angle θ1 of the trace portion 21 and the intersection angle θ2 of the cut-off portion 50 substantially coincide with each other. Further, the inclination angle α1 of the trace portion 21 and the inclination angle α2 of the cut-off portion 50 substantially coincide with each other. Further, the inclination angle β1 of the trace portion 21 and the inclination angle β2 of the cut-off portion 50 substantially coincide with each other.

As shown in FIG. 7, among the left and right pair of deformation absorption recesses 52, a right deformation absorption recess 52 is arranged to the right of the right cut-off portion 50. That is, the cut-off portion 50 and the deformation absorption recess 52 are arranged adjacent to each other. As shown in FIG. 8, the deformation absorption recess 52 is recessed from the mold surface 50U toward an upper side. An up-down direction cross-sectional shape of the deformation absorption recess 52 presents a trapezoidal shape that tapers from a lower side toward an upper side.

As shown in FIG. 8, the deformation absorption recess 52 includes a bottom surface 520, a recessed inner side surface 521, and a recessed outer side surface 522. The bottom surface 520 is arranged at a position recessed toward an upper side relative to the parting line PL (mold surface 50U). The bottom surface 520 presents a planar shape extending in a horizontal direction. The recessed inner side surface 521 is arranged on a left side of the bottom surface 520 (cavity recess portion 51 side, X-direction inner side). The recessed inner side surface 521 presents a planar shape. As shown in FIG. 8, the recessed inner side surface 521 and the protruding outer side surface 502 of the cut-off portion 50 connect in a planar shape without bending. That is, the recessed inner side surface 521 and the protruding outer side surface 502 connect smoothly. The recessed outer side surface 522 is arranged on a right side of the bottom surface 520 (opposite side of the cavity recess portion 51 side, X-direction outer side). The recessed outer side surface 522 presents a planar shape.

As shown in FIG. 8, a width in the left-right direction between the recessed inner side surface 521 and the recessed outer side surface 522 gradually decreases from a lower side toward an upper side (from the parting line PL toward the bottom surface 520). That is, the recessed inner side surface 521 and the recessed outer side surface 522 are arranged in a tapered shape that tapers from the lower side toward the upper side.

### [Manufacturing method of composite member for fuel cell]

Next, a manufacturing method of the composite member for fuel cell of the present embodiment will be described. As described above, the manufacturing method of the present embodiment includes an injection process and a vulcanization process (crosslinking process).

### (Injection Process)

The injection process includes a separator arrangement process, a shaping process, and an injection filling process. As shown in FIG. 5, in the separator arrangement process, a separator 2 is arranged from an upper side onto a mold surface 50D of a first mold 5D of a mold 5 in a mold-open state. An adhesive (not shown) is applied in advance to an upper surface 2U of the separator 2. In arranging the separator 2, a manifold protrusion 53 is inserted into a manifold 23 of the separator 2. That is, the separator 2 is positioned on the mold surface 50D.

As shown in FIG. 6 to FIG. 8, in the shaping process, a second mold 5U is brought into pressure contact with the first mold 5D by a predetermined mold clamping force. That is, mold clamping is performed. By the mold clamping, the cut-off portion 50 is brought into pressure contact with the upper surface 2U of the separator 2. At this time, a top surface 500 of the cut-off portion 50 is brought into pressure contact with the upper surface 2U over an entire surface thereof without any uneven contact. By the pressure contact, a trace portion 21 is recessed in the upper surface 2U.

As shown in an exaggerated manner in FIG. 8, in a case where the cut-off portion 50 recesses the trace portion 21 in the separator 2, an adjacent portion 22 of the separator 2 adjacent to the trace portion 21 rises upward from the mold surface 50D. Here, a deformation absorption recess 52 of the second mold 5U is arranged corresponding to the adjacent portion 22. For this reason, the risen adjacent portion 22 is accommodated in the deformation absorption recess 52. In this manner, the deformation absorption recess 52 absorbs deformation of the separator 2 in a case where the top surface 500 of the cut-off portion 50 is brought into pressure contact with the separator 2.

It is to be noted that as the number of shots of the mold 5 increases, the mold surface 50D may be recessed by the cut-off portion 50. In this case, as shown by dotted lines in FIG. 7 and FIG. 8, a protrusion 24 is formed on a lower surface 2D. Further, a recess 54 is formed on the mold surface 50D. As viewed from the up-down direction (in plan view), the cut-off portion 50, the trace portion 21, the protrusion 24, and the recess 54 overlap with each other.

As shown in FIG. 9 and FIG. 10, in the injection filling process, a raw material G of the gasket 4 is injected and filled into a cavity 5M after mold clamping. Due to injection pressure, the raw material G tends to leak out from the cavity 5M to the outside through a boundary between a mold surface 50U of the second mold 5U and the upper surface 2U of the separator 2. However, the cut-off portion 50 of the mold surface 50U is in pressure contact with the trace portion 21 of the upper surface 2U. For this reason, the raw material G is less likely to leak out from the cavity 5M to the outside.

### (Vulcanization Process)

In the vulcanization process, first, the mold 5 in a state after the injection filling process (mold clamping state) is conveyed from a location where the injection filling process is performed to a location where the vulcanization process is performed. Next, as shown in FIG. 11 and FIG. 12, the mold 5 in the mold clamping state is heated at a predetermined temperature for a predetermined time to cure the raw material G in the cavity 5M, thereby producing the gasket 4. Moreover, the gasket 4 is bonded and fixed to a gasket placement portion 20 by the adhesive applied to the upper surface 2U of the separator 2. Thereafter, mold opening is performed, and a composite member for fuel cell 1 is taken out from the mold 5. It is to be noted that deformation of the adjacent portion 22 in the preceding process (injection process) (deformation from a flat plate shape to a curved plate shape, as shown in FIG. 6 to FIG. 8) is elastic deformation. For this reason, by the mold opening, the adjacent portion 22 is restored to a shape before mold clamping (see FIG. 6). That is, the adjacent portion 22 is restored from the curved plate shape to the flat plate shape.

In the preceding process (injection process), the cut-off portion 50 is brought into pressure contact with the trace portion 21. For this reason, the raw material G is less likely to leak out from the cavity 5M to the outside. Accordingly, a burr B is less likely to be formed on the composite member for fuel cell 1 after the present process (vulcanization process). Further, the burr B is less likely to extend.

### [Operational Effects]

Next, the operational effects of the mold and the composite member for fuel cell of the present embodiment will be described. As shown in FIG. 8, a top surface 500 of the cut-off portion 50 is planar and extends in a horizontal direction (a direction in which the parting line PL extends, and a direction orthogonal to the up-down direction (the opening and closing direction of the mold 5)). For this reason, compared to a case where the top surface 500 is curved, or a case where the top surface 500 extends in a direction intersecting the horizontal direction, it is possible to suppress the top surface 500 from locally coming into pressure contact with the separator 2 during mold clamping (i.e., suppress the top surface 500 from making uneven contact with the separator 2). Accordingly, concentration of stress on a portion of the top surface 500 may be alleviated. Thus, damage to the cut-off portion 50 may be suppressed, and durability may be improved. Further, since the durability of the cut-off portion 50 is improved, a degree of freedom in material selection for the separator 2 may be increased. For example, a separator 2 made of a material with a high Young's modulus (such as stainless steel) may be adopted.

Further, compared to a case where the top surface 500 is not arranged on the cut-off portion 50 (for example, a case where a pair of side surfaces (a protruding inner side surface 501 and a protruding outer side surface 502) shown in FIG. 8 are directly connected without the top surface 500), shape accuracy of the cut-off portion 50 (in particular, height accuracy in the up-down direction) may be increased.

As shown in FIG. 8, a width in the left-right direction between the pair of side surfaces (the protruding inner side surface 501 and the protruding outer side surface 502) narrows from the upper side toward the lower side (from the parting line PL toward the top surface 500). For this reason, compared to a case where the width in the left-right direction between the pair of side surfaces is constant from the upper side toward the lower side, in other words, compared to a case where the pair of side surfaces extend in the up-down direction, concentration of stress at a boundary between the top surface 500 and the side surfaces (that is, a corner portion C2) during mold clamping may be alleviated.

As shown in FIG. 5, a first mold 5D is a fixed mold, and a second mold 5U is a movable mold. That is, in the injection process, the first mold 5D is fixed when the mold 5 is opened and closed. The separator 2 is arranged in the first mold 5D. For this reason, positional displacement of the separator 2 during opening and closing of the mold 5 may be suppressed.

As shown in FIG. 6, the cut-off portion 50 is arranged on two sides of the cavity recess portion 51 in the left-right direction. For this reason, generation of the burr B shown in FIG. 11 and FIG. 12 may be suppressed on two sides of the cavity recess portion 51 in the left-right direction (the frame inner side and the frame outer side). Further, extension of the burr B may be suppressed.

As shown in FIG. 1, when viewed from the up-down direction (in a plan view), a trace portion 21 extends in an endless annular shape around the gasket 4. As shown in FIG. 11, the trace portion 21 corresponds to the cut-off portion 50. The gasket 4 corresponds to the cavity recess portion 51. Thus, when viewed from the up-down direction, the cut-off portion 50 extends in an endless annular shape around the cavity recess portion 51. That is, the cut-off portion 50 surrounds the cavity recess portion 51. For this reason, as shown in FIG. 9, leakage of a raw material G of the gasket 4 may be suppressed over the entire circumference of the cavity recess portion 51, that is, the cavity 5M.

A ratio (= surface area/plate thickness) of a surface area of the separator 2 shown in FIG. 1 (an area of an upper surface 2U) to a plate thickness of the separator 2 shown in FIG. 3 (a thickness in the up-down direction) is included in a range of 30000 or more and 3125000 or less. That is, the separator 2 presents a thin plate shape. For this reason, compared to a case where the ratio is less than 30000, the plate thickness becomes larger relative to the surface area, and an increase in size of a stack (laminate) of a fuel cell may be suppressed. Further, compared to a case where the ratio exceeds 3125000, the plate thickness becomes smaller relative to the surface area, and excessive deformation of the separator 2 may be suppressed. It is noted that a dimension of the ratio described above is a distance L. A unit of the surface area is mm², a unit of the plate thickness is mm, and a unit of the ratio is mm.

The separator 2 in which the ratio (= surface area/plate thickness) described above is included in the range of 30000 or more and 3125000 or less presents a thin plate shape and is moderately prone to deformation. Thus, as shown in FIG. 7 and FIG. 8, during mold clamping, a shape accuracy of a mold surface 50U of the second mold 5U is prone to be reflected (transferred) onto the upper surface 2U of the separator 2. For example, in order to improve durability of the cut-off portion 50, a quenching process may be applied to the second mold 5U including the cut-off portion 50 to increase hardness. However, in the case of applying the quenching process, deformation such as "warping" tends to occur in the second mold 5U. That is, shape accuracy of the second mold 5U tends to decrease. Thus, in the case of molding the gasket 4 on the thin plate-shaped separator 2 (the separator 2 prone to deformation) using the quenching-processed second mold 5U, there is a possibility that shape accuracy of the separator 2 decreases.

In this regard, according to the mold 5 of the present embodiment, durability of the cut-off portion 50 may be improved without deliberately applying a process for increasing hardness (a process that may cause a decrease in shape accuracy) to the mold 5. For this reason, even though the separator 2 presents a thin plate shape, that is, even though the separator 2 is prone to deformation, a decrease in shape accuracy of the separator 2 may be suppressed.

A ratio (= surface area/thickness in the up-down direction) of a surface area of the separator 2 shown in FIG. 1 to a thickness in the up-down direction of the gasket 4 shown in FIG. 3 is included in a range of 5000 or more and 500000 or less. For this reason, compared to a case where the ratio is less than 5000, the thickness in the up-down direction of the gasket 4 becomes larger relative to the surface area, and an increase in size of a stack (laminate) of a fuel cell may be suppressed. Further, compared to a case where the ratio exceeds 500000, the thickness in the up-down direction of the gasket 4 becomes smaller relative to the surface area, and a decrease in an amount of elastic deformation of the gasket 4 may be suppressed, that is, a decrease in sealing performance may be suppressed. It is noted that a dimension of the ratio described above is a distance L. A unit of the surface area is mm², a unit of the thickness in the up-down direction is mm, and a unit of the ratio is mm.

With a Young's modulus of a material of the second mold 5U taken as 100%, a Young's modulus of a material of the separator 2 is included in a range of 80% or more and 150% or less. For this reason, compared to a case where the Young's modulus of the material of the separator 2 is less than 80%, a decrease in rigidity of the separator 2 may be suppressed. Further, even though the rigidity of the separator 2 is high, durability of the cut-off portion 50 may be secured. Further, compared to a case where the Young's modulus of the material of the separator 2 exceeds 150%, an excessive increase in rigidity of the separator 2 may be suppressed.

The separator 2 is made of stainless steel. For this reason, corrosion of the separator 2 may be suppressed by an oxide film of the stainless steel. Further, compared to a case where the separator 2 made of a material with a low Young's modulus (for example, titanium) is used, rigidity of the separator 2 may be increased. Further, even though the rigidity of the separator 2 is high, durability of the cut-off portion 50 may be improved.

As shown in FIG. 8, a corner portion C2 is interposed at each of a boundary between the top surface 500 and the protruding inner side surface 501 and a boundary between the top surface 500 and the protruding outer side surface 502. For this reason, compared to a case where a rounded chamfered portion (a curved chamfer) is interposed at the boundary between the top surface 500 and the protruding inner side surface 501 and the boundary between the top surface 500 and the protruding outer side surface 502, shape accuracy of the cut-off portion 50 may be increased.

As shown in FIG. 8, the protruding inner side surface 501 and the protruding outer side surface 502 each present a planar shape. For this reason, a width in the left-right direction between a pair of side surfaces (the protruding inner side surface 501 and the protruding outer side surface 502) gradually narrows in a direction from the parting line PL toward the top surface 500. Thus, concentration of stress on a part of the side surfaces during mold clamping is alleviated.

As shown in FIG. 8, an intersection angle θ2 between the protruding inner side surface 501 and the protruding outer side surface 502 is an obtuse angle. For this reason, compared to a case where the intersection angle θ2 is 90° or less, concentration of stress at a boundary between the top surface 500 and the side surfaces (the protruding inner side surface 501 and the protruding outer side surface 502), that is, at the corner portion C2, during mold clamping may be alleviated.

As shown in FIG. 8, the intersection angle θ2 is included in a range of 120° or more and 150° or less. For this reason, compared to a case where the intersection angle θ2 is less than 120°, concentration of stress at the corner portion C2 during mold clamping may be alleviated. Further, compared to a case where the intersection angle θ2 exceeds 150°, an increase in a width in the left-right direction of the cut-off portion 50 may be suppressed. That is, the cut-off portion 50 may be reduced in size.

As shown in FIG. 8, an inclination angle α2 of the protruding inner side surface 501 with respect to the up-down direction and an inclination angle β2 of the protruding outer side surface 502 with respect to the up-down direction are each 60° or more. For this reason, compared to a case where the inclination angles α2 and β2 are less than 60°, concentration of stress at the corner portion C2 during mold clamping may be alleviated.

As shown in FIG. 8, the inclination angle α2 and the inclination angle β2 are identical. For this reason, stress distribution on two sides in the left-right direction (inner-outer frame direction) with respect to an X-direction central axis of the cut-off portion 50 (specifically, an axis passing through a left-right direction center of the cut-off portion 50 in FIG. 8 and extending in the up-down direction, and parallel to the X-direction central axis A in FIG. 7) may be equalized.

As shown in FIG. 8, the second mold 5U includes a deformation absorption recess 52. The deformation absorption recess 52 is disposed on a right side (X-direction outer side) of the cut-off portion 50. The deformation absorption recess 52 may absorb deformation of a separator 2 in response to the top surface 500 being in pressure contact with the separator 2. That is, during mold clamping, in the case where the top surface 500 of the cut-off portion 50 is in pressure contact with an upper surface 2U of the separator 2, the separator 2 may elastically deform. Specifically, the separator 2 may rise from a mold surface 50D of the first mold 5D. In this regard, according to a composite member for fuel cell 1 of the present embodiment, a deformed portion (adjacent portion 22) of the separator 2 may be accommodated in the deformation absorption recess 52. For this reason, an apparent cut-off depth (apparent cut-in amount) D of the cut-off portion 50 with respect to the separator 2 may be increased.

As shown in FIG. 8, a width in the left-right direction (X-direction width) between a recessed inner side surface 521 and a recessed outer side surface 522 of the deformation absorption recess 52 narrows from a lower side toward an upper side (from the parting line PL toward a bottom surface 520). For this reason, in the case where the adjacent portion 22 elastically deforms from a flat plate shape to a curved plate shape (a curved plate shape bulging from the lower side toward the upper side), the adjacent portion 22 may be accommodated in the deformation absorption recess 52 with ease.

As shown in FIG. 8, the cut-off portion 50 and the deformation absorption recess 52 are disposed adjacent to each other in the left-right direction. From a left side (X-direction inner side) toward a right side (X-direction outer side), the protruding outer side surface 502 of the cut-off portion 50 and the recessed inner side surface 521 of the deformation absorption recess 52 connect smoothly in a planar manner. For this reason, compared to a case where a boundary between the protruding outer side surface 502 and the recessed inner side surface 521 is angular, concentration of stress at the boundary may be alleviated.

As shown in FIG. 10, a protrusion amount in the Y-direction (protrusion amount in the up-down direction) E of the top surface 500 with respect to the parting line PL is set to 20 µm. That is, the protrusion amount E in the Y-direction is included in a range of 10 µm or more and 100 µm or less. For this reason, compared to a case where the protrusion amount E in the Y-direction is less than 10 µm, passage of a raw material G of the gasket 4 through a boundary between the cut-off portion 50 and a trace portion 21 may be suppressed. Accordingly, leakage of the raw material G from a cavity 5M to the outside may be suppressed. That is, sealing performance may be improved. Further, compared to a case where the protrusion amount E in the Y-direction is less than 10 µm, processing accuracy of a mold 5 may be improved. Further, compared to a case where the protrusion amount E in the Y-direction exceeds 100 µm, excessive cut-in of the top surface 500 into the separator 2 may be suppressed. Accordingly, damage to the cut-off portion 50 and the separator 2 may be suppressed.

As shown in FIG. 10, an X-direction width (width in the left-right direction) F of the top surface 500 is set to 70 µm. That is, the X-direction width F is included in a range of 10 µm or more and 500 µm or less. For this reason, compared to a case where the X-direction width F is less than 10 µm, passage of the raw material G of the gasket 4 through the boundary between the cut-off portion 50 and the trace portion 21 may be suppressed. Accordingly, leakage of the raw material G from a cavity 5M to the outside may be suppressed. That is, sealing performance may be improved. Further, compared to a case where the X-direction width F exceeds 500 µm, a pressure contact area of the top surface 500 with respect to the separator 2 may be reduced. Accordingly, damage to the cut-off portion 50 and the separator 2 may be suppressed.

As shown in FIG. 8, the cut-off portion 50 is disposed at a predetermined interval away from the cavity recess portion 51 toward the right side (X-direction outer side). That is, the cut-off portion 50 is disposed offset toward the right side from the cavity recess portion 51. For this reason, compared to a case where the cut-off portion 50 is disposed adjacent to the cavity recess portion 51, concentration of stress at a boundary between the cut-off portion 50 and the cavity recess portion 51 during mold clamping may be alleviated.

As shown in FIG. 4, a width in the left-right direction between a pair of side surfaces (a trace portion recessed inner side surface 211 and a trace portion recessed outer side surface 212) of the trace portion 21 of the composite member for fuel cell 1 narrows from an upper side toward a lower side (from the upper surface 2U toward a bottom surface 210). For this reason, compared to a case where the width in the left-right direction between the pair of side surfaces is constant from the upper side toward the lower side, concentration of residual stress at a boundary between the bottom surface 210 and the side surfaces (the trace portion recessed inner side surface 211 and the trace portion recessed outer side surface 212), that is, at a corner portion C1, may be alleviated.

Further, the composite member for fuel cell 1 of the present embodiment is manufactured using the mold 5 of the present embodiment (as shown in FIG. 9, a mold 5 including a pair of cut-off portions 50 on two sides in the left-right direction (frame inner side and frame outer side) of the cavity recess portion 51). For this reason, as shown in FIG. 2, generation of burr B on two sides in the left-right direction (frame inner side and frame outer side) of the gasket 4 may be suppressed. Further, extension of the burr B may be suppressed. Further, an occupied area of the burr B on the upper surface 2U may be reduced.

As shown in FIG. 12, the bottom surface 210 of the trace portion 21 is formed by the top surface 500 of the cut-off portion 50, the trace portion recessed inner side surface 211 of the trace portion 21 is formed by a protruding inner side surface 501 of the cut-off portion 50, the trace portion recessed outer side surface 212 of the trace portion 21 is formed by the protruding outer side surface 502 of the cut-off portion 50, and a corner portion C1 of the trace portion 21 is formed by a corner portion C2 of the cut-off portion 50, respectively.

The top surface 500 of the cut-off portion 50 is planar and extends in a horizontal direction. For this reason, compared to a case where the top surface 500 is curved, or a case where the top surface 500 extends in a direction intersecting the horizontal direction, it is possible to suppress the top surface 500 from locally coming into pressure contact with the separator 2 during mold clamping (i.e., suppress the top surface from making uneven contact with the separator 2). Accordingly, concentration of stress at a part of the top surface 500, that is, concentration of residual stress at a part of the bottom surface 210 of the trace portion 21, may be alleviated. Further, compared to a case where the top surface 500 is not disposed on the cut-off portion 50, shape accuracy of the cut-off portion 50, that is, the trace portion 21, may be improved.

An X-direction width (width in the left-right direction) W2 between a pair of side surfaces (the protruding inner side surface 501 and the protruding outer side surface 502) of the cut-off portion 50 narrows from the parting line PL toward the top surface 500. For this reason, compared to a case where the X-direction width W2 between the pair of side surfaces is constant in a direction from the parting line toward the top surface, concentration of stress at a corner portion C2 of the cut-off portion 50 during mold clamping may be alleviated. Accordingly, concentration of residual stress at the corner portion C1 of the trace portion 21 may be suppressed.

### <Second Embodiment>

A difference between the mold and the composite member for fuel cell of the present embodiment and the mold and the composite member for fuel cell of the first embodiment is that the cut-off portion and the cavity recess portion are disposed adjacent to each other in the left-right direction. Further, the protruding inner side surface of the cut-off portion extends to an interior of the cavity recess portion. Here, only the differences are described.

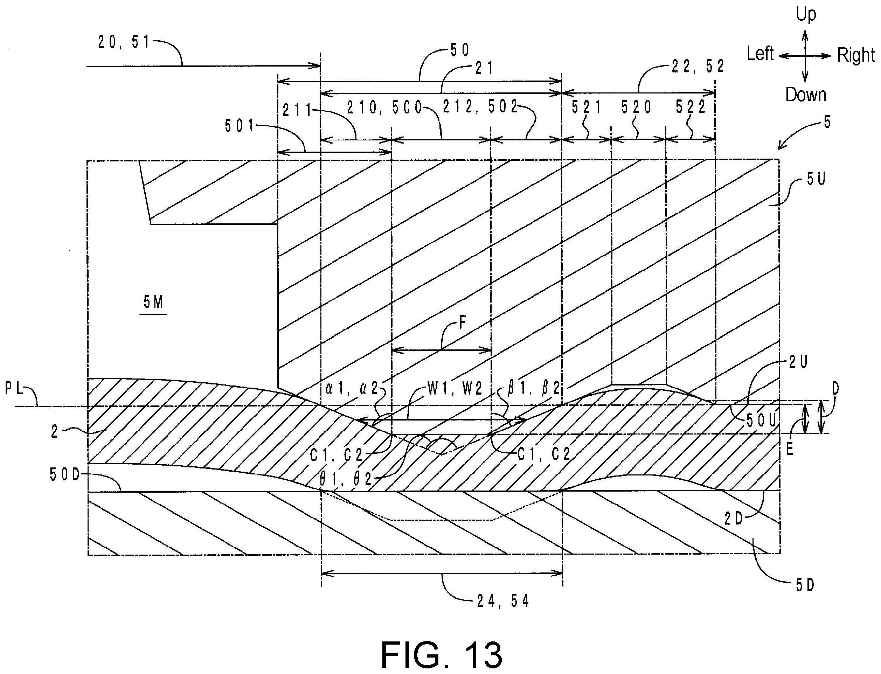

FIG. 13 shows a partial cross-sectional view of the mold of the present embodiment. Parts corresponding to those in FIG. 8 are indicated by the same reference numerals. As shown in FIG. 13, the cut-off portion 50 and the cavity recess portion 51 are disposed adjacent to each other in the left-right direction (X-direction). The protruding inner side surface 501 of the cut-off portion 50 straddles the parting line PL from a lower right side toward an upper left side. The protruding inner side surface 501 extends from the top surface 500 to an interior of the cavity recess portion 51. In other words, a left end portion of the protruding inner side surface 501 of the cut-off portion 50 and a right end portion of an opening edge of the cavity recess portion 51 overlap each other.

The mold 5 and the composite member for fuel cell of the present embodiment and the mold and the composite member for fuel cell of the first embodiment have similar operational effects with respect to parts having a common configuration. According to the mold 5 of the present embodiment, compared to a case where the protruding inner side surface 501 does not straddle the parting line PL (a case where the protruding inner side surface 501 does not extend to the interior of the cavity recess portion 51), concentration of stress at an opening edge of the cavity recess portion 51 during mold clamping may be alleviated.

### <Third Embodiment>

A difference between the mold and the composite member for fuel cell of the present embodiment and the mold and the composite member for fuel cell of the first embodiment is that a deformation absorption recess is not disposed. Here, only the differences are described.

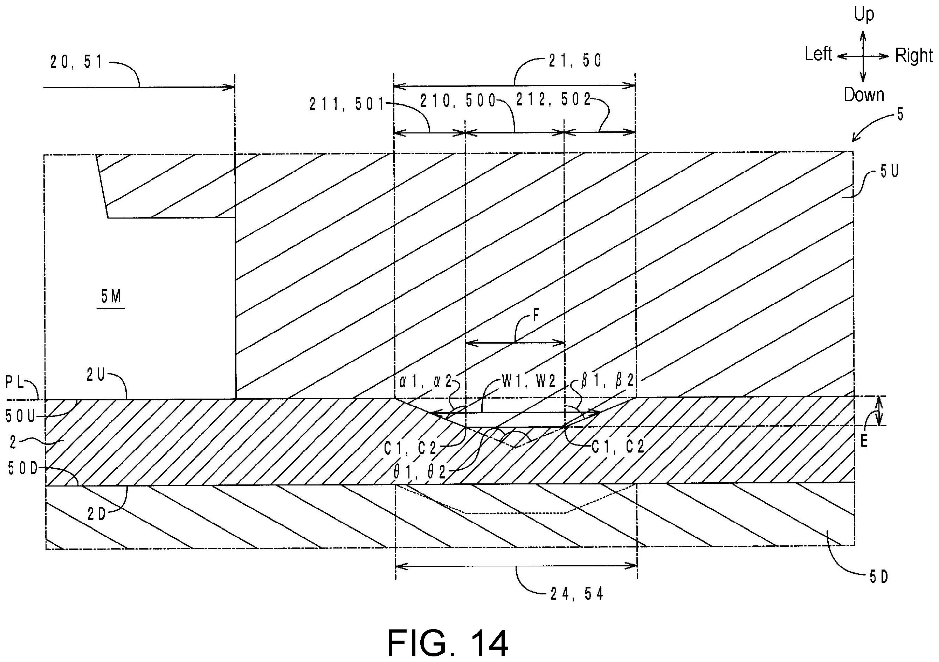

FIG. 14 shows a partial cross-sectional view of the mold of the present embodiment. Parts corresponding to those in FIG. 8 are indicated by the same reference numerals. As shown in FIG. 14, the deformation absorption recess 52 shown in FIG. 8 is not disposed on a right side (X-direction outer side) of the cut-off portion 50. The mold 5 and the composite member for fuel cell of the present embodiment and the mold and the composite member for fuel cell of the first embodiment have similar operational effects with respect to parts having a common configuration. According to the mold 5 of the present embodiment, a surface shape of the mold surface 50U may be simplified compared to a case where the deformation absorption recess is disposed in the second mold 5U.

### <Fourth Embodiment>

A difference between the mold and the composite member for fuel cell of the present embodiment and the mold and the composite member for fuel cell of the first embodiment is that the cut-off portion and the cavity recess portion are disposed adjacent to each other in the left-right direction. Further, the protruding inner side surface of the cut-off portion extends to an interior of the cavity recess portion. Further, the deformation absorption recess is not disposed. Here, only the differences are described.

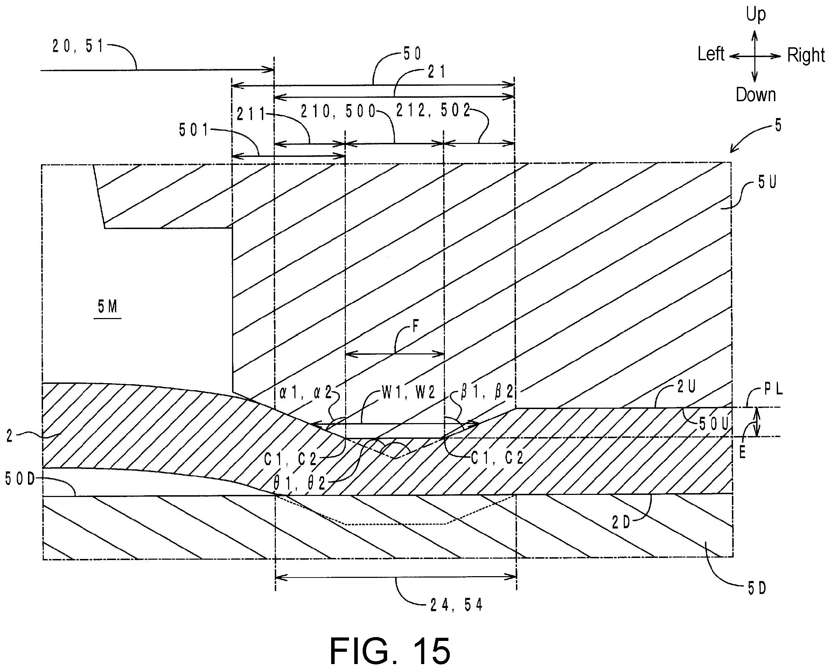

FIG. 15 shows a partial cross-sectional view of the mold of the present embodiment. Parts corresponding to those in FIG. 8 are indicated by the same reference numerals. As shown in FIG. 15, the cut-off portion 50 and the cavity recess portion 51 are disposed adjacent to each other in the left-right direction (X-direction). The protruding inner side surface 501 of the cut-off portion 50 straddles the parting line PL from a lower right side toward an upper left side. The protruding inner side surface 501 extends from the top surface 500 to an interior of the cavity recess portion 51. In other words, a left end portion of the protruding inner side surface 501 of the cut-off portion 50 and a right end portion of an opening edge of the cavity recess portion 51 overlap each other. The deformation absorption recess 52 shown in FIG. 8 is not disposed on a right side (X-direction outer side) of the cut-off portion 50.

The mold 5 and the composite member for fuel cell of the present embodiment and the mold and the composite member for fuel cell of the first embodiment have similar operational effects with respect to parts having a common configuration. According to the mold 5 of the present embodiment, compared to a case where the protruding inner side surface 501 does not straddle the parting line PL (a case where the protruding inner side surface 501 does not extend to the interior of the cavity recess portion 51), concentration of stress at an opening edge of the cavity recess portion 51 during mold clamping may be alleviated. Further, a surface shape of the mold surface 50U may be simplified compared to a case where the deformation absorption recess is disposed in the second mold 5U.

### <Others>

The embodiments of the mold and the composite member for fuel cell of the disclosure have been described above. However, the embodiments are not particularly limited to the above-described forms. Implementation in various modified forms and improved forms that a person skilled in the art may carry out is also possible.

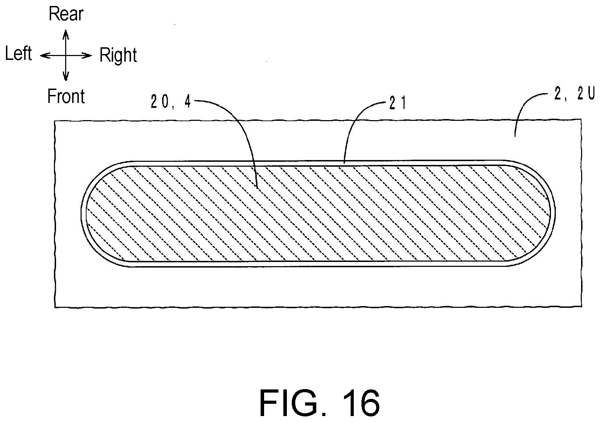

FIG. 16 shows a partial top view of a composite member for fuel cell of another embodiment. Parts corresponding to those in FIG. 2 are indicated by the same reference numerals. As shown in FIG. 16, a gasket placement portion 20, that is, a gasket 4, extends in a linear and strip-like manner. A trace portion 21 surrounds the gasket placement portion 20 in an endless annular shape over the entire circumference. That is, the cut-off portion 50 of the mold 5 surrounds the gasket placement portion 20 in an endless annular shape over the entire circumference. For this reason, in the injection process described above, leakage of a raw material G of the gasket 4 may be suppressed over the entire circumference of the cavity recess portion 51, that is, the cavity 5M. In this manner, the extending shape of the gasket 4 (the shape viewed in a plan view from the up-down direction as shown in FIG. 1) is not particularly limited. The extending shape may be a strip shape (a linear shape, a curved shape, a shape in which these shapes are appropriately combined, etc.), a lump shape (a circular shape, an elliptical shape, a droplet shape, a polygonal shape (a triangular shape, a quadrangular shape, a hexagonal shape, etc.), an indeterminate shape, etc.), or a frame shape (a circular frame shape, an elliptical frame shape, a polygonal frame shape).

A cross-sectional shape of the gasket 4 (the shape in a direction orthogonal to the extending direction of the gasket 4 as shown in FIG. 3) is not particularly limited. For example, the cross-sectional shape may be a rectangular shape, a trapezoidal shape, an arc shape, a V-shape, a C-shape, a U-shape, a shape in which these shapes are appropriately combined, etc.

The presence or absence, shape, size, number, etc. of burrs B extending from the gasket placement portion 20 shown in FIG. 12 are not particularly limited. As shown in FIG. 16, the burrs B may not extend from the gasket placement portion 20. The burrs B may extend from one location of the gasket placement portion 20. The burrs B may extend from a plurality of locations of the gasket placement portion 20. The burrs B may extend from the entirety of the gasket placement portion 20. The burrs B may or may not reach the cut-off portion 50 (the trace portion 21). The burrs B may extend beyond the cut-off portion 50.

The relative positional relationship between the gasket placement portion 20 and the cut-off portion 50 (the trace portion 21) is not particularly limited. As shown in FIG. 11, the cut-off portion 50 may be disposed on both the frame inner side and the frame outer side of the frame-shaped gasket placement portion 20. The cut-off portion 50 may be disposed only on the frame inner side of the frame-shaped gasket placement portion 20. The cut-off portion 50 may be disposed only on the frame outer side of the frame-shaped gasket placement portion 20. That is, the cut-off portion 50 may be disposed on at least one of the frame outer side and the frame inner side of the frame-shaped gasket placement portion 20.

The extending shape of the trace portion 21 (the same applies to the cut-off portion 50 and the deformation absorption recess 52) (the shape viewed in a plan view from the up-down direction as shown in FIG. 1) is not particularly limited. The extending shape may be a strip shape (a linear shape, a curved shape, a shape in which these shapes are appropriately combined, etc.), a lump shape (a circular shape, an elliptical shape, a droplet shape, a polygonal shape (a triangular shape, a quadrangular shape, a hexagonal shape, etc.), an indeterminate shape, etc.), or a frame shape (a circular frame shape, an elliptical frame shape, a polygonal frame shape).

A cross-sectional shape of the trace portion 21 (the same applies to the cut-off portion 50 and the deformation absorption recess 52) (the shape in a direction orthogonal to the extending direction of the gasket 4 as shown in FIG. 3) is not particularly limited. For example, the cross-sectional shape may be a rectangular shape, a trapezoidal shape, an arc shape, a V-shape, a C-shape, a U-shape, a shape in which these shapes are appropriately combined, etc.

The extending shape of the gasket placement portion 20 (the same applies to the cavity recess portion 51 and the gasket 4) and the extending shape of the trace portion 21 (the same applies to the cut-off portion 50 and the deformation absorption recess 52) may either coincide with or differ from each other. For example, both the gasket placement portion 20 and the trace portion 21 may extend in a frame shape. Alternatively, the gasket placement portion 20 may extend in a linear shape, and the trace portion 21 may extend in a frame shape (endless annular shape) around the gasket placement portion 20.

The number of arrangements of the gasket placement portion 20 (the same applies to the cavity recess portion 51 and the gasket 4) and the number of arrangements of the trace portion 21 (the same applies to the cut-off portion 50 and the deformation absorption recess 52) may either coincide with or differ from each other. A single trace portion 21 may be disposed with respect to a single gasket placement portion 20. A plurality of trace portions 21 may be disposed with respect to a single gasket placement portion 20. A single trace portion 21 may be disposed with respect to a plurality of gasket placement portions 20. For example, a single frame-shaped trace portion 21 that comprehensively surrounds the gasket placement portions 20 may be disposed with respect to a plurality of island-shaped gasket placement portions 20.

the protrusion amount E in the Y-direction, the X-direction width F, W1, and W2, the inclination angles α1, α2, β1, and β2, and the intersection angles θ1 and θ2 shown in FIG. 8 are not particularly limited. The inclination angles α1, α2, β1, and β2 may each be 60° or more, or may be less than 60°. The inclination angle α1 and the inclination angle β1 may be the same or different from each other. The inclination angle α2 and the inclination angle β2 may be the same or different from each other. The intersection angles θ1 and θ2 may or may not each be included in a range of 120° or more and 150° or less. The intersection angles θ1 and θ2 may each be an obtuse angle, a right angle, or an acute angle.

The shapes of the bottom surface 210, the trace portion recessed inner side surface 211, the trace portion recessed outer side surface 212, the top surface 500, the protruding inner side surface 501, and the protruding outer side surface 502 are not particularly limited. The shapes may each be planar, curved, or a shape in which these shapes are appropriately combined. A rounded chamfered portion may be disposed in place of the corner portions C1 and C2. The aspects relating to the shapes of the trace portion 21 and the cut-off portion 50 described above may be applied to the shape of the deformation absorption recess 52. The deformation of the adjacent portion 22 during mold clamping shown in FIG. 12 may or may not remain in the separator 2 after mold opening. That is, the deformation of the adjacent portion 22 during mold clamping may be plastic deformation or elastic deformation.

The arrangement direction of the first mold 5D and the second mold 5U of the mold 5 shown in FIG. 5 (the opening and closing direction of the mold 5) is not particularly limited. The arrangement direction may be a vertical direction, a horizontal direction, or a direction intersecting the vertical direction and the horizontal direction. In the injection process, the first mold 5D may be a fixed mold and the second mold 5U may be a movable mold. Conversely, the first mold 5D may be a movable mold and the second mold 5U may be a fixed mold.

The material of the mold 5 is not particularly limited. The material may be corrosion-resistant steel, carbon tool steel, alloy tool steel, high-speed tool steel, as-rolled steel, prehardened steel, hardened steel, hardened and tempered steel, age-hardened steel, etc. The material of the separator 2 is not particularly limited. The material may be a resin, a metal, etc. that has conductivity and does not have corrosivity. Examples thereof include stainless steel, titanium, copper, magnesium, aluminum, carbon, graphite, ceramics, and conductive resin (a thermoplastic resin or a thermosetting resin containing carbon, graphite, polyacrylonitrile-based carbon fiber, etc.).

The material of the gasket 4 is not particularly limited. The material may be an elastomer that has insulating properties and rubber elasticity after curing. The material may have fluidity at the stage of the raw material G (the stage before curing). The gasket 4 may contain, in addition to a rubber component, a crosslinking agent, a co-crosslinking agent, a processing aid, a softener, a reinforcing material, etc. Suitable rubber components include VMQ (silicone rubber), silicone rubbers other than VMQ (such as PVMQ (phenylvinylmethyl silicone rubber) and FVMQ (fluorovinylmethyl silicone rubber)), EPDM (ethylene propylene diene rubber), FKM (fluororubber), etc. In the case of using liquid silicone rubber as the raw material G, the type of the liquid silicone rubber is not particularly limited. The liquid silicone rubber may be a one-component type or a two-component type. The liquid silicone rubber may also be a roomtemperature curing type or a heat curing type.

In the above embodiment, a composite member for fuel cell is described as an example of the composite member for electrochemical device of the disclosure. However, the type of the electrochemical device is not particularly limited. The electrochemical device may be a device that converts chemical energy into electrical energy, or electrical energy into chemical energy. Examples of the electrochemical device include a fuel cell, a secondary battery, and a water electrolysis device.

In the above embodiment, a method of manufacturing a composite member for fuel cell including an injection process and a vulcanization process (crosslinking process) is described as an example of a method of manufacturing the composite member for electrochemical device of the disclosure. However, the method of manufacturing the composite member for electrochemical device of the disclosure is not particularly limited. For example, a method of manufacturing a composite member for electrochemical device including an injection process and a vulcanization integration process may be used. In this case, in the injection process, a gasket may be formed, and in the vulcanization integration process, the gasket and a base material may be integrated by vulcanizing and curing the gasket in a state in which the gasket is laminated on the base material.

### Reference Signs List

1: Composite member for fuel cell (composite member for electrochemical device), 2: Separator (base material), 2D: Lower surface, 2U: Upper surface (surface), 20: Gasket placement portion, 21: Trace portion, 210: Bottom surface, 211: Trace portion recessed inner side surface, 212: Trace portion recessed outer side surface, 22: Adjacent portion, 23: Manifold, 24: Protrusion, 4: Gasket, 5: Mold, 5D: First mold, 50D: Mold surface, 5M: Cavity, 5U: Second mold, 50U: Mold surface, 50: Cut-off portion, 500: Top surface, 501: Protruding inner side surface, 502: Protruding outer side surface, 51: Cavity recess portion, 52: Deformation absorption recess, 520: Bottom surface, 521: Recessed inner side surface, 522: Recessed outer side surface, 53: Manifold protrusion, 54: Recess portion, α1: Inclination angle, α2: Inclination angle, β1: Inclination angle, β2: Inclination angle, θ1: Intersection angle, θ2: Intersection angle, A: X-direction central axis, B: Burr, C1: Corner portion, C2: Corner portion, D: Apparent cut-off depth, E: Protrusion amount in Y-direction, F: X-direction width, G: Raw material, H: Frame, PL: Parting line, W1: X-direction width, W2: X-direction width

## Claims

1. A mold, which is a mold for insert molding used for molding a gasket on a thin plate-shaped base material disposed in a mold and comprising a cut-off portion that suppresses burrs from the gasket,
wherein an extending direction of a parting line of the mold is defined as an X-direction, an opening and closing direction of the mold is defined as a Y-direction, a side close to a cavity for molding the gasket in the X-direction is defined as an X-direction inner side, and a side opposite to the X-direction inner side in the X-direction is defined as an X-direction outer side, the mold comprising:
a first mold on which the base material is disposed; and
a second mold disposed facing the first mold in the Y-direction and having the cut-off portion and a cavity recess portion disposed on the X-direction inner side of the cut-off portion and defining the cavity,
wherein the cut-off portion has a planar top surface that protrudes toward the base material side with respect to the parting line and extends in the X-direction, a protruding inner side surface disposed on the X-direction inner side of the top surface, and a protruding outer side surface disposed on the X-direction outer side of the top surface, and
the X-direction width between the protruding inner side surface and the protruding outer side surface narrows in a direction from the parting line toward the top surface.

2. The mold according to claim 1, wherein the protruding inner side surface and the protruding outer side surface each present a planar shape.

3. The mold according to claim 2, wherein an intersection angle between the protruding inner side surface and the protruding outer side surface is an obtuse angle.

4. The mold according to claim 3, wherein the intersection angle is 120° or more and 150° or less.

5. The mold according to claim 2, wherein an inclination angle of the protruding inner side surface with respect to the Y-direction and an inclination angle of the protruding outer side surface with respect to the Y-direction are identical.

6. The mold according to claim 1, wherein the protruding inner side surface straddles the parting line and extends from the top surface to an interior of the cavity recess portion.

7. The mold according to claim 1, wherein the second mold has a deformation absorption recess disposed on the X-direction outer side of the cut-off portion and configured to absorb deformation of the base material when the top surface is in pressure contact with the base material.

8. The mold according to claim 7, wherein the deformation absorption recess has a planar bottom surface that is recessed into an interior of the second mold with respect to the parting line and extends in the X-direction, a recessed inner side surface disposed on the X-direction inner side of the bottom surface, and a recessed outer side surface disposed on the X-direction outer side of the bottom surface, and
the X-direction width between the recessed inner side surface and the recessed outer side surface narrows in a direction from the parting line toward the bottom surface.

9. The mold according to claim 8, wherein the cut-off portion and the deformation absorption recess are disposed adjacent to each other, and
the protruding outer side surface and the recessed inner side surface connect smoothly from the X-direction inner side toward the X-direction outer side.

10. The mold according to claim 1, wherein the top surface has a protrusion amount in the Y-direction with respect to the parting line of 10 µm or more and 100 µm or less.

11. The mold according to claim 1, wherein the X-direction width of the top surface is 10 µm or more and 500 µm or less.

12. The mold according to claim 1, wherein the cut-off portion is disposed at a predetermined interval away from the cavity recess portion toward the X-direction outer side.

13. A composite member for an electrochemical device comprising a base material and a gasket disposed on a surface of the base material,
wherein an extending direction of the surface is defined as an X-direction, a laminating direction of the base material and the gasket is defined as a Y-direction, a side close to the gasket in the X-direction is defined as an X-direction inner side, and a side opposite to the X-direction inner side in the X-direction is defined as an X-direction outer side,
the base material has, on the surface, a recessed trace portion and a gasket placement portion disposed on the X-direction inner side of the trace portion and on which the gasket is disposed,
the trace portion has a planar bottom surface, a trace portion recessed inner side surface disposed on the X-direction inner side of the bottom surface, and a trace portion recessed outer side surface disposed on the X-direction outer side of the bottom surface, and
the X-direction width between the trace portion recessed inner side surface and the trace portion recessed outer side surface narrows in a direction from the surface toward the bottom surface.
